(19) Europäisches Patentamt
European Patent Office
Office européen des brevets

(11) EP 4 516 871 A1

(12) EUROPEAN PATENT APPLICATION
published in accordance with Art. 153(4) EPC

(43) Date of publication:
**05.03.2025 Bulletin 2025/10**

(21) Application number: **24779592.5**

(22) Date of filing: **15.03.2024**

(51) International Patent Classification (IPC):
***C09K 3/18*** (2006.01) ***D06M 13/224*** (2006.01)
***D21H 21/14*** (2006.01)

(52) Cooperative Patent Classification (CPC):
**C09D 101/00; C09D 103/00; C09D 171/00; C09D 201/00; C09K 3/18; D06M 13/148; D06M 13/17; D06M 13/224; D06M 15/03; D06M 15/53; D21H 21/14**

(86) International application number:
**PCT/JP2024/010275**

(87) International publication number:
**WO 2024/203464 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 JP 2023048603**

(71) Applicant: **DAIKIN INDUSTRIES, LTD.**
**Osaka-shi, Osaka 530-0001 (JP)**

(72) Inventors:
- **AKUTA, Ryo**
  **Osaka-Shi, Osaka 530-0001 (JP)**
- **SAKAMAKI, Tatsunori**
  **Osaka-Shi, Osaka 530-0001 (JP)**
- **SHIMANO, Mayumi**
  **Osaka-Shi, Osaka 530-0001 (JP)**
- **NAKANO, Marina**
  **Osaka-Shi, Osaka 530-0001 (JP)**
- **MATSUMOTO, Akane**
  **Osaka-Shi, Osaka 530-0001 (JP)**
- **IKEUCHI, Hideyuki**
  **Osaka-Shi, Osaka 530-0001 (JP)**
- **HIGASHI, Masahiro**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) REPELLENT

(57) A water dispersible repellent containing a modified form of a polyol and a dispersant, the repellent satisfying one or more of (1) and (2), and being capable of imparting oil resistance to a base material (for example, fiber or paper). (1) Differential scanning calorimetry of the modified form of a polyol or differential scanning calorimetry of a solid component obtained by removing the liquid medium from the repellent shows the temperature of the maximum endothermic peak in the temperature zone of 25°C-180° C is 55°C or more. (2) The modified form of a polyol has at least four monovalent C20-40 hydrocarbon groups which may have substituents.

EP 4 516 871 A1

## Description

Technical Field

The present disclosure relates to a repellent and a product treated with the repellent.

Background Art

In recent years, development of non-fluorine repellents capable of imparting liquid repellency (water repellency, oil repellency, oil resistance, and/or water resistance) to various substrates has been promoted.

Citation List

Patent Literature

[Patent Literature 1] JP 2021-155492 A

Summary of Invention

Technical Problem

Patent Literature 1 does not mention oil resistance.
An object of the present disclosure is to provide a repellent capable of imparting oil resistance to substrates (e.g., fiber, paper).

Solution to Problem

The present disclosure includes the following embodiments.

[Item 1]

A water-dispersible repellent comprising a modified body of polyol and a dispersant,
wherein the water-dispersible repellent satisfies one or more of (1) and (2):

(1) in differential scanning calorimetry of the modified body of polyol or in differential scanning calorimetry of a solid component obtained by removing a liquid medium from the repellent, the maximum endothermic peak temperature in a temperature range of 25°C to 180°C is 55°C or more;
(2) the modified body of polyol has four or more monovalent hydrocarbon groups having 20 or more and 40 or less carbon atoms and optionally having a substituent.

[Item 2]

The repellent according to item 1, wherein, in the differential scanning calorimetry of the modified body of polyol, the maximum endothermic peak temperature in a temperature range of 25°C to 180°C is 55°C or more.

[Item 3]

The repellent according to item 1 or 2, wherein, in the differential scanning calorimetry of the solid component obtained by removing a liquid medium from the repellent, the maximum endothermic peak temperature in a temperature range of 25°C to 180°C is 55°C or more.

[Item 4]

The repellent according to any one of items 1 to 3, wherein a ratio of diffraction intensity between a peak intensity $A_{25°C}$ of the maximum peak at a measurement temperature of 25°C and a peak intensity $A_{55°C}$ of the maximum peak at a measurement temperature of 55°C [$A_{55°C}/A_{25°C}$] is 0.5 or more in the range of 2θ of 15° to 30° in temperature variable X-ray diffractometry of the solid component obtained by removing a liquid medium from the repellent.

[Item 5]

The repellent according to any one of items 1 to 4, wherein the modified body of polyol has four or more monovalent hydrocarbon groups having 20 or more and 40 or less carbon atoms and optionally having a substituent.

[Item 6]

The repellent according to item 5, wherein the monovalent hydrocarbon group having 20 or more and 40 or less carbon atoms and optionally having a substituent is an alkyl group.

[Item 7]

The repellent according to any one of items 1 to 6, wherein the modified body of polyol is a compound formed by replacing four or more hydroxy groups of polyol with a group represented by the following formula:

$$-Y-Z_n$$

wherein Y is a 1+n valent group composed of one or more selected from the group consisting of $Y^1$ and $Y^2$,
$Y^1$ is a group composed of one or more selected from the group consisting of a direct bond, -O-, -C(=O)-, -C(=NR')-, -S-, $-S(=O)_2-$, -NR'-, -C(OR')R'-, $-C(OR')(-)_2$ and $-N(-)_2$, wherein R' is independently at each occurrence a hydrogen atom or an organic group having 1 to 30 carbon atoms,
$Y^2$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z is a monovalent hydrocarbon group having 20 or more and 40 or less carbon atoms and optionally having a substituent, and
n is an integer of 1 or more and 3 or less.

[Item 8]

The repellent according to item 7, wherein Y is

$-O-Y^{11}-$ or

$-O-Y^{11}-Y^{21}-Y^{12}-$

wherein, independently at each occurrence,
$Y^{11}$ is a direct bond, -C(=O)-, -C(=O)-NR'- or -C(=S)-NR'-,
$Y^{21}$ is a hydrocarbon group having 1 to 40 carbon atoms and optionally having a substituent and
$Y^{12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, - C(=O)-O-, -C(=O)-NR'-, $-SO_2-$, $-SO_2NR'-$, -C(OR')R'- or $-C(OR')(-)_2$.

[Item 9]

The repellent according to any one of items 1 to 8, wherein the polyol is a least one selected from the group consisting of a monosaccharide, an oligosaccharide, a polysaccharide, a sugar alcohol, a hydroxy acid, an amino acid, vitamin, flavonol, hydroxyhydrocarbon and a polymer of a hydroxy group-containing compound.

[Item 10]

The repellent according to any one of items 1 to 9, wherein the polyol is at least one selected from the group consisting of:

glucose, fructose, galactose, xylose;
sucrose, cycloamylose, cyclodextrin, maltose, trehalose, lactose, sucralose;
sorbitol, maltitol, erythritol, isomalt, lactitol, mannitol, xylitol, sorbitan, lactitol;
starch, cellulose, curdlan, pullulan, alginic acid, carrageenan, guar gum, chitin, chitosan, locust bean gum, kappa-carrageenan, iota-carrageenan, isomaltodextrin, gellan gum, tamarind seed gum;
ascorbic acid, kojic acid, quinic acid, chlorogenic acid, gluconic acid;
glucosamine;
inositol;
catechin, quercetin, anthocyanin;
ethylene glycol, propylene glycol, diethylene glycol, triethylene glycol, tetraethylene glycol, neopentyl glycol, trimethylene glycol, glycerol, trimethylolpropane, trimethylolethane;
polyglycerol, polyvinyl alcohol, hydroxyethyl (meth)acrylate polymer, hydroxypropyl (meth)acrylate polymer and hydroxybutyl (meth)acrylate polymer.

[Item 11]

The repellent according to any one of items 1 to 10, wherein the repellent has a volume abundance ratio of particles with a size of 100 μm or larger of 25% or less as measured by laser diffraction scattering.

[Item 12]

The repellent according to any one of items 1 to 11, wherein the modified body of polyol has a biobased ratio of 20% or more.

[Item 13]

The repellent according to any one of items 1 to 12, wherein the modified body of polyol is a compound formed by replacing a hydroxy group of the polyol with a group represented by the following formula:

$$-Y-Z_n$$

wherein Y is

$$-O-Y^{11}-$$

or

$$-O-Y^{11}-Y^{21}-Y^{12}-$$

wherein, independently at each occurrence,
$Y^{11}$ is a direct bond, -C(=O)-, -C(=O)-NR'- or -C(=S)-NR'-,
$Y^{21}$ is a hydrocarbon group having 1 to 40 carbon atoms and optionally having a substituent, and
$Y^{12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, - C(=O)-O-, -C(=O)-NR'-, $-SO_2-$, $-SO_2NR'-$, -C(OR')R'- or $-C(OR')(-)_2$,
Z is a hydrocarbon group having 6 or more and 40 or less carbon atoms, and
n is an integer of 1 or more and 3 or less,
the polyol is at least one selected from the group consisting of:

glucose, fructose, galactose, xylose;
sucrose, cycloamylose, cyclodextrin, maltose, trehalose, lactose, sucralose;
sorbitol, maltitol, erythritol, isomalt, lactitol, mannitol, xylitol, sorbitan, lactitol;
starch, cellulose, curdlan, pullulan, alginic acid, carrageenan, guar gum, chitin, chitosan, locust bean gum, kappa-carrageenan, iota-carrageenan, isomaltodextrin, gellan gum, tamarind seed gum;
ascorbic acid, kojic acid, quinic acid, chlorogenic acid, gluconic acid;
glucosamine;
inositol;
catechin, quercetin, anthocyanin;
ethylene glycol, propylene glycol, diethylene glycol, triethylene glycol, tetraethylene glycol, neopentyl glycol, trimethylene glycol, glycerol, trimethylolpropane, trimethylolethane;
polyglycerol, polyvinyl alcohol, hydroxyethyl (meth)acrylate polymer, hydroxypropyl (meth)acrylate polymer and hydroxybutyl (meth)acrylate polymer, and
the modified body of polyol has a hydroxy group substitution ratio of 30% or more.

[Item 14]

The repellent according to any one of items 1 to 13, wherein the modified body of polyol is a compound formed by replacing a hydroxy group of polyglycerol having a degree of polymerization of 5 or more and 15 or less or a sugar alcohol with a group represented by the following formula:

-O-C(=O)-Z

or

-O-C(=O)NH-Z,

wherein

Z is an alkyl group having 20 or more and 24 or less carbon atoms, and
the modified body of polyol has a hydroxy group substitution ratio of 50% or more.

[Item 15]

The repellent according to any one of items 1 to 14, which is for a textile product or a paper product.

[Item 16]

A product treated with the repellent according to any one of items 1 to 15.

[Item 17]

The product according to item 16, which is a textile product or a paper product.

[Item 18]

The product according to item 16 or 17, which is an oil-resistant paper or a water-resistant paper.

[Item 19]

The product according to any one of items 16 to 18, which is a food packaging material or a food container.

[Item 20]

A method for producing a treated product, comprising treating a substrate with the repellent according to any one of items 1 to 15.

[Item 21]

The production method according to item 20, wherein the treatment is internal addition treatment.

Advantageous Effect of Invention

The repellent of the present disclosure can impart excellent liquid-repellency (in particular, oil resistance) to paper products.

Brief Description of Drawings

[Figures 1 to 7] Figures 1 to 7 show the results of a measurement by temperature variable X-ray diffractometry of a solid component obtained by removing a liquid medium from the repellent in Examples and Comparative Examples.

Description of Embodiments

<Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include $C_{1-20}$ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

<Repellent>

The repellent of the present disclosure imparts liquid-repellency (water-repellency, oil-repellency, oil resistance and/or water resistance) to a substrate (e.g., fiber substrate, paper substrate), and may function as at least one selected from a water-repellent agent, an oil-repellent agent, an oil-resistant agent and a water-resistant agent. The repellent of the present disclosure can impart good oil resistance (oil-repellency) and/or water resistance (water-repellency) to a substrate, and for example, can impart both oil resistance and water resistance to a substrate.

The repellent of the present disclosure may be a water-dispersible repellent comprising a modified body of polyol and a dispersant. The repellent of the present disclosure satisfies one or more of (1) and (2):

(1) in differential scanning calorimetry of the modified body of polyol or in differential scanning calorimetry of a solid component obtained by removing a liquid medium from the repellent, the maximum endothermic peak temperature in a temperature range of 25°C to 180°C is 55°C or more;
(2) the modified body of polyol has four or more monovalent hydrocarbon groups having 20 or more and 40 or less carbon atoms and optionally having a substituent.

The repellent of the present disclosure may not include one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The repellent of the present disclosure can impart liquid-repellency to a substrate without these fluorine compounds.

{Volume abundance ratio of particle}

The volume abundance ratio of particles with a size of 100 μm or larger in the repellent of the present disclosure may be 25% or less, 20% or less, 15% or less, 10% or less, 5% or less, 3% or less, or 1.5% or less, and preferably 15% or less, or 5% or less as measured by laser diffraction scattering. The volume abundance ratio of particles with a size of 100 μm or larger in the above range is preferred from the viewpoint of covering properties. The method for setting the volume abundance ratio of particles with a size of 100 μm or larger to 25% or less as measured by laser diffraction scattering is not limited, and particles in the raw material and/or dispersion may be formed into fine particles, for example, using a pulverizer or a homogenizer.

{Volume median diameter}

The repellent of the present disclosure may have a volume median diameter measured by laser diffraction

scattering of 10 nm or more, 30 nm or more, 50 nm or more, 100 nm or more, preferably 150 nm or more, or 200 nm or more, and 100 μm or less, 90 μm or less, 80 μm or less, 70 μm or less, 60 μm or less, 50 μm or less, 40 μm or less, 30 μm or less, 20 μm or less, or 10 μm or less, preferably 30 μm or less, or 25 μm or less. In the present disclosure, the volume median diameter refers to the median diameter (D50) in a volume-based particle size distribution by laser diffraction scattering.

{Differential scanning calorimetry}

In differential scanning calorimetry of a solid component obtained by removing a liquid medium from the repellent of the present disclosure, the maximum endothermic peak temperature in a temperature range of 25°C to 180°C is preferably 55°C or more. This allows the effect of the present disclosure to be higher. The maximum endothermic peak temperature may be 55°C or more, 60°C or more, or 65°C or more. The maximum endothermic peak temperature may be 100°C or less, 90°C or less, 80°C or less, or 70°C or less.

{Temperature variable X-ray diffractometry}

In temperature variable X-ray diffractometry of a solid component obtained by removing a liquid medium from the repellent of the present disclosure, the ratio of diffraction intensity between a peak intensity $A_{25°C}$ of the maximum peak at a measurement temperature of 25°C and a peak intensity $A_{55°C}$ of the maximum peak at a measurement temperature of 55°C [$A_{55°C/A25°C}$] is preferably 0.5 or more in the range of 2θ of 15° to 30°. The ratio of diffraction intensity [$A_{55°C}/A_{25°C}$] may be 0.6 or more, 0.7 or more, 0.8 or more, 0.9 or more, 1.0 or more, 1.1 or more, and preferably 0.8 or more, or 0.9 or more, and 3 or less, 2.75 or less, 2.5 or less, 2.35 or less, or 2.0 or less. A ratio of diffraction intensity in the above range, for example, a ratio of diffraction intensity of the lower limit or more, allows the array structure of alkyl chain to be maintained even at high temperatures, making the effect of the present disclosure higher.

{Modified body of polyol}

The modified body of polyol in the present disclosure adheres to a substrate and imparts liquid-repellency to the substrate.

[Characteristics of modified body of polyol]

The modified body of polyol may have a HD (n-hexadecane) contact angle of 10° or more, 15° or more, 25° or more, 35° or more, 40° or more, 45° or more, 50° or more, 55° or more, or 65° or more, and preferably 30° or more, and 100° or less, 90° or less or 75° or less. A HD contact angle of the modified body of polyol of the lower limit or more can impart good liquid-repellency (in particular oil-repellency) to a substrate. The HD contact angle is a static contact angle of a modified body of polyol to a spin-coated film, which is obtained by dropping 2 μL of HD on a spin-coated film and measuring the contact angle one second after the droplet reaches the film as shown in Examples.

The modified body of polyol may have a water contact angle of 35° or more, 40° or more, 45° or more, 50° or more, 55° or more, 65° or more, 75° or more, 85° or more, 90° or more, or 100° or more, and 160° or less, 140° or less, 130° or less, 120° or less, 110° or less, 100° or less or 90° or less. A water contact angle of the modified body of polyol of the lower limit or more can impart good liquid-repellency (in particular water-repellency) to a substrate. The water contact angle is a static contact angle of a modified body of polyol to a spin-coated film, which is obtained by dropping 2 μL of water on a spin-coated film and measuring the contact angle one second after the droplet reaches the film as shown in Examples.

The modified body of polyol is preferably a compound with carbon of biobased origin. A biobased content is measured in accordance with ASTM D6866. The biobased content may be 20% or more, preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the modified body of polyol is preferred from that point of view.

The modified body of polyol preferably has a biodegradation of 5% or more. A higher biodegradation is preferred because of small environmental load. The modified body of polyol may have a biodegradation of, for example, 10% or more, 20% or more, 30% or more, 50% or more, 60% or more, 70% or more, 80% or more, or 90% or more, and preferably 60% or more, more preferably 70% or more, further preferably 80% or more, and most preferably 90% or more. This biodegradation refers to the biodegradation as of the 180$^{th}$ day specified in JIS K 6953-1 and ASTM D6400.

The modified body of polyol may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The modified body of polyol can impart liquid-repellency without including these fluorine-containing groups

to a substrate.

It is preferable that in the differential scanning calorimetry of the modified body of polyol, the maximum endothermic peak temperature in a temperature range of 25°C to 180°C is 55°C or more. This allows the effect of the present disclosure to be higher. The maximum endothermic peak temperature may be 55°C or more, 60°C or more, or 65°C or more. The maximum endothermic peak temperature may be 100°C or less, 90°C or less, 80°C or less, or 70°C or less.

The modified body of polyol is a polymer having a degree of polymerization of 1 or more. The modified body of polyol may have a degree of polymerization of 2 or more, 3 or more, 5 or more, 6 or more, preferably 7 or more, more preferably 8 or more, and further preferably 9 or more from the viewpoint of the improvement in the liquid-repellency. The modified body of polyol may have a degree of polymerization of 100 or less, preferably 50 or less, more preferably 30 or less, further preferably 15 or less, and particularly preferably 12 or less from the viewpoint of the improvement in handling properties of the repellent. The degree of polymerization means the repeating number of monomer units constituting the polymer.

The degree of polymerization in the present disclosure means an average degree of polymerization. The average degree of polymerization in the present disclosure is measured under the following conditions.

When the modified body of polyol in the present disclosure is a modified body of polyglycerol obtained by modifying polyglycerol, the degree of polymerization of the modified body of polyol means the average degree of polymerization of the polyglycerol. The average degree of polymerization of polyglycerol refers to an average degree of polymerization (n) calculated from the hydroxyl number determined by the end group analysis. More specifically, the average degree of polymerization and the average molecular weight are calculated from the following (Formula 1) and (Formula 2).

(Formula 1) Average molecular weight = 74n + 18

Hydroxyl number = 56110 (n+2) / average molecular weight (Formula 2)

The hydroxyl number in the above (Formula 2) indicates the number of hydroxyl groups in polyglycerol. The hydroxyl number is calculated from the amount of potassium hydroxide necessary for neutralizing acetic acid used for acetylation of free hydroxyl groups contained in 1 g of polyglycerol, which is determined according to The JOCS Standard Methods for the Analysis of Fats, Oils and Related Materials (I), 2003, edited by Japan Oil Chemists' Society. The hydroxyl number of polyglycerol, which is the raw material, is actually measured by the above Standard Methods for the Analysis of Fats, Oils and Related Materials, and the average degree of polymerization and the average molecular weight of polyglycerol may be calculated by the above relational expression.

When the modified body of polyol in the present disclosure is a modified body of polyvinyl alcohol obtained by modifying polyvinyl alcohol, the degree of polymerization of the modified body of polyol means the average degree of polymerization of the polyvinyl alcohol. The average degree of polymerization of polyvinyl alcohol may be measured according to JIS K 6726, Testing Methods for Polyvinyl Alcohol.

When the modified body of polyol in the present disclosure is a modified body of polysaccharide obtained by modifying polysaccharide, the degree of polymerization of the modified body of polyol means the average degree of polymerization of the polysaccharide. The average degree of polymerization of polysaccharide may be analyzed as follows. The degree of polymerization refers to the number of monosaccharide units in polysaccharide (fructose and glucose units), and the average degree of polymerization means the maximum of the peaks in the results of analysis obtained by a common analytical method such as HPLC, GC or HPAEC as described below. The average degree of polymerization may be measured by using ULTRON PS-80N made by Shinwa Chemical Industries Ltd. (8 × 300 mm) (solvent: water, flow rate: 0.5 ml/ minute, temperature: 50°C) or TSK-GEL G30000 PWXL made by Tosoh Corporation (7.8 × 300 mm) (solvent: water, flow rate: 0.5 ml/ minute, temperature: 50°C) as the column, and a differential refractometer as the detector.

The modified body of polyol may be a low molecular weight compound (having a weight average molecular weight of less than 1,500, less than 1,000 or 500 or less) and/or a high molecular weight compound. The modified body of polyol may have a weight average molecular weight of 100 or more, 300 or more, 500 or more, 1,000 or more, 3,000 or more, 5,000 or more, 10,000 or more, 30,000 or more, 100,000 or more, 300,000 or more, or 500,000 or more, and may have a weight average molecular weight of 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.

The hydroxy group substitution ratio of the modified body of polyol may be 1% or more, 3% or more, 5% or more, 10% or more, 20% or more, 30% or more, 40% or more, 50% or more, 60% or more, 70% or more, 80% or more, 90% or

more, or 100%, preferably 10% or more, for example, 30% or more, 40% or more, 50% or more, 60% or more, 70% or more, particularly 80% or more, and 100% or less, 95% or less, 85% or less, 75% or less, 65% or less, 55% or less, 45% or less, 35% or less, 25% or less, 15% or less, and for example, 95% or less. The "substitution ratio" means the proportion of modified hydroxy groups (mol%) out of the hydroxy groups derived from polyol, and may mean the proportion of hydroxy groups (mol%) modified by a monovalent hydrocarbon group having 1 or more and 40 or less (for example, 20 or more and 40 or less) carbon atoms and optionally having a substituent.

The residual ratio of hydroxyl groups in the modified body of polyol may be 1% or more, 3% or more, 5% or more, 10% or more, 20% or more, 30% or more, 40% or more, 50% or more, 60% or more, 70% or more, 80% or more, or 90% or more, and for example, may be 5% or more, and may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups derived from the polyol.

The number of modifying groups (a monovalent hydrocarbon group having 1 or more and 40 or less (for example, 20 or more and 40 or less) carbon atoms) that the modified body of polyol has may be 2 or more, 4 or more, 5 or more, 7 or more, 8 or more, 9 or more, 10 or more, 12 or more, 15 or more, 30 or more, or 50 or more, and 1,000 or less, 750 or less, 500 or less, 300 or less, 100 or less, 50 or less, 30 or less, or 20 or less.

The modifying group equivalent of the modified body of polyol may be 150 or more, 250 or more, 350 or more, 450 or more, 550 or more, 650 or more, 750 or more, or 1,000 or more, and 2,500 or less, 2,000 or less, 1,500 or less, 1,000 or less, 750 or less, 500 or less, or 400 or less. The modifying group equivalent is obtained by dividing the weight average molecular weight of modified body of polyol by the number of modifying groups.

[Structure of modifying group]

In the modified body of polyol, one or more of hydroxy groups in polyol are modified by a modifying group. For the modifying group, the modified body of polyol may have a monovalent hydrocarbon group having 1 or more and 40 or less (for example, 20 or more and 40 or less) carbon atoms and optionally having a substituent from the viewpoint of the improvement in liquid repellency.

(Monovalent hydrocarbon group optionally having a substituent)

The hydrocarbon group by which polyol of the modified body of polyol is modified is a monovalent hydrocarbon group optionally having a substituent.

The hydrocarbon group may be a monovalent hydrocarbon group having 1 or more and 40 or less (for example 20 or more and 40 or less) carbon atoms. The hydrocarbon group may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be branched, cyclic or linear, and preferably linear.

The hydrocarbon group may have 1 or more, 3 or more, 6 or more, 8 or more, 10 or more, 12 or more, 14 or more, 16 or more, 18 or more, 20 or more, 22 or more, 24 or more, 26 or more, or 28 or more, preferably 6 or more, 10 or more, 12 or more, or 16 or more carbon atoms, and 40 or less, 35 or less, 30 or less, or 25 or less, preferably 35 or less, or 30 or less carbon atoms.

The hydrocarbon group may have a substituent, but is preferably non-substituted. Examples of substituents include - OR', $-N(R')_2$, -COOR', and a halogen atom (wherein R' is independently at each occurrence a hydrogen atom or an organic group having 1 to 30, 1 to 20, 1 to 10, or 1 to 4 carbon atoms (such as a hydrocarbon group, in particular an aliphatic hydrocarbon group)). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.

($-Y-Z_n$)

In the modified body of polyol in the present disclosure, one or more hydroxy groups in polyol are substituted by a group represented by the following formula:

$$-Y-Z_n$$

[wherein Y is a 1+n valent group composed of one or more selected from the group consisting of $Y^1$ and $Y^2$,

$Y^1$ is a group composed of one or more selected from the group consisting of a direct bond, -O-, -C(=O)-, -C(=NR')-, -S-, -S(=O)$_2$-, -NR'-, -C(OR')R'-, -C(OR') (-)$_2$ and -N(-)$_2$ (wherein R' is independently at each occurrence a hydrogen atom or an organic group having 1 to 30 (for example, 1 to 20, 1 to 10, or 1 to 4) carbon atoms (such as a hydrocarbon group, in particular, an aliphatic hydrocarbon group)),

$Y^2$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,

Z is a monovalent hydrocarbon group having 1 or more and 40 or less (for example, 20 or more and 40 or less) carbon atoms and optionally having a substituent, and

n is an integer of 1 or more and 3 or less].

(Y)

Y is a 1+n valent group composed of one or more selected from the group consisting of $Y^1$ and $Y^2$,

$Y^1$ is a group composed of one or more selected from the group consisting of a direct bond, -O-, -C(=O)-, -C(=NR')-, -S-, -S(=O)$_2$-, -NR'-, -C(OR')R'-, -C(OR') (-)$_2$ and -N(-)$_2$ (wherein R' is independently at each occurrence a hydrogen atom or an organic group having 1 to 30 (for example, 1 to 20, 1 to 10, or 1 to 4) carbon atoms (such as a hydrocarbon group, in particular, an aliphatic hydrocarbon group)),

$Y^2$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of Z bonded to Y, and may be an integer of 1 or more and 3 or less. n may be 1 or more, 2 or more, or 3 or more, and 3 or less, 2 or less, or 1 or less, and for example, 2 or less.

Y may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

◦ $Y^1$

$Y^1$ is a non-hydrocarbon linker.

$Y^1$ is a direct bond or a divalent or higher valent group. $Y^1$ may have a valence of 2 to 4, 2 or 3, or 2. It is preferable that $Y^1$ is not limited to direct bond.

$Y^1$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^1$ may be composed of one or more selected from the group consisting of a direct bond, -O-, -C(=O)-, -S(=O)$_2$-, -NR'-, - C(OR')R'- and -C(OR')(-)$_2$ (wherein R' is independently at each occurrence a hydrogen atom or an organic group having 1 to 30 (for example, 1 to 20, 1 to 10, or 1 to 4) carbon atoms (such as a hydrocarbon group, in particular, an aliphatic hydrocarbon group)).

Examples of $Y^1$ include:

a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

$-SO_2-$,

$-SO_2NR'-$,

-C(OR')R'-,

and $-C(OR')(-)_2$
(wherein R' is independently at each occurrence a hydrogen atom or an organic group having 1 to 30 (for example, 1 to 20, 1 to 10, or 1 to 4) carbon atoms (such as a hydrocarbon group, in particular, an aliphatic hydrocarbon group)).

◦ $Y^2$

$Y^2$ is a hydrocarbon optionally having a substituent, a hydrocarbon aromatic ring optionally having a substituent or a heterocyclic linker optionally having a substituent.
$Y^2$ may be a hydrocarbon group or a non-hydrocarbon group (including a heteroatom). $Y^2$ may be aliphatic or aromatic. $Y^2$ may be linear, branched or cyclic.
$Y^2$ is a divalent or higher valent group. $Y^2$ may have a valence of, for example, 2 to 4, 2 or 3, or 2.
$Y^2$ may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.
$Y^2$ is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.
The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.
The aliphatic hydrocarbon group may have a substituent. Examples of substituents include -OR', $-N(R')_2$, -COOR', and a halogen atom (wherein R' is independently at each occurrence a hydrogen atom or an organic group having 1 to 30, 1 to 20, 1 to 10, or 1 to 4 carbon atoms (such as a hydrocarbon group, in particular an aliphatic hydrocarbon group)). The substituent may have or be free of active hydrogen. The number of substituent may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.
Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene, and coronene. The number of ring constituting atom of the hydrocarbon aromatic ring is 3 to 20, 4 to 16, or 5 to 12 and preferably 5 to 12. A valence of the hydrocarbon aromatic ring may be 2 or more, 3 or more, or 4, and may be 4 or less, 3 or less, or 2.
The hydrocarbon aromatic ring may have a substituent. Examples of substituents include -R', -OR', $-N(R')_2$, -COOR' and a halogen atom (wherein R' is independently at each occurrence a hydrogen atom or an organic group having 1 to 30, 1 to 20, 1 to 10, or 1 to 4 carbon atoms (such as a hydrocarbon group, in particular an aliphatic hydrocarbon group)). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.
The divalent to tetravalent heterocyclic ring may be an aliphatic group or an aromatic group. Examples of the

divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', $-N(R')_2$, -COOR' and a halogen atom (wherein R' is independently at each occurrence a hydrogen atom or an organic group having 1 to 30, 1 to 20, 1 to 10, or 1 to 4 carbon atoms (such as a hydrocarbon group, in particular an aliphatic hydrocarbon group)). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and for example 65 mol% or more, and may be 95 mol% or less, 90 mol% or less, 85 mol% or less, 80 mol% or less, or 70 mol% or less.

Examples of $Y^2$ include

-Ali-

-Cy-

$-Ali(-)_2$

$-Cy(-)_2$

$(-)_2Ali-$

$(-)_2Cy-$

$(-)_2Ali(-)_2$

$(-)_y(-)_2$

-Ali-Cy-

-Cy-Ali-

-Cy-Ali-Cy-

-Ali-Cy-Ali-

[wherein Ali is an aliphatic hydrocarbon group having 1 to 20 carbon atoms and Cy is a hydrocarbon aromatic ring or a heterocyclic ring].

Specific examples of $Y^2$ include:

- $(CH_2)_p$- (p is 1 to 40, 1 to 20, or 1 to 10),

  a linear hydrocarbon group having 1 to 40, 1 to 20, or 1 to 10 carbon atoms and having an unsaturated bond,
  a branched hydrocarbon group having 1 to 40, 1 to 20, or 1 to 10 carbon atoms, and

- $(CH_2)_q$-Cy-$(CH_2)_r$- (q and r are each independently 0 to 20, for example, 1 to 10, and Cy is a hydrocarbon aromatic ring or a heterocyclic ring).

(Example of Y)

Examples of Y will be described. In the following, R' is independently at each occurrence a hydrogen atom or an organic group having 1 to 30 (for example, 1 to 20, 1 to 10, or 1 to 4) carbon atoms (such as a hydrocarbon group, in particular an aliphatic hydrocarbon group).

When Y is divalent, examples of Y include $-Y^1-$, $-Y^1-Y^2-$, $-Y^1-Y^2-Y^1-$, $-Y^1-Y^2-Y^1-Y^2-$, $-Y^2-$, $-Y^2-Y^1-$, $-Y^2-Y^1-Y^2-$ and

$-Y^2-Y^1-Y^2-Y^1$.

When Y is trivalent, examples of Y include $-Y^1(-)_2$, $-Y^1-Y^2(-)_2$, $-Y^1-(Y^2-)_2$, $-Y^1-Y^2-Y^1(-)_2$, $-Y^1-Y^2(-Y^1-)_2$, $-Y^1-(Y^2-Y^1-)_2$, $-Y^1-Y^2-Y^1-Y^2(-)_2$, $-Y^1-Y^2-Y^1-(Y^2-)_2$, $-Y^1-Y^2-(Y^1-Y^2-)_2$, $-Y^1-(Y^2-Y^1-Y^2-)_2$; $-Y^2(-)_2$, $-Y^2-Y^1(-)_2$, $-Y^2-(Y^1-)_2$, $-Y^2-Y^1-Y^2(-)_2$, $-Y^2-Y^1(-Y^2-)_2$, $-Y^2-(Y^1-Y^2-)_2$, $-Y^2-Y^1-Y^2-Y^1(-)_2$, $-Y^2-Y^1-Y^2-(Y^1-)_2$,, $-Y^2-Y^1-(Y^2-Y^1-)_2$, $-Y^2-(Y^1-Y^2-Y^1-)_2$.

When Y is tetravalent, examples of Y include $-Y^1(-)_3$ $-Y^1-Y^2(-)_3$, $-Y^1-(Y^2-)_3$, $-Y^1-Y^2-Y^1(-)_3$, $-Y^1-Y^2(-Y^1-)_3$, $-Y^1-(Y^2-Y^1-)_3$, $-Y^1-Y^2-Y^1-Y^2(-)_3$, $-Y^1-y^2-Y^1-(Y^2-)_3$, $-Y^1-Y^2-(Y^1-Y^2-)_3$, $-Y^1-(Y^2-Y^1-Y^2-)_3$; $-Y^2(-)_3$, $-Y^2-Y^1(-)_3$, $-Y^2-(Y^1-)_3$, $-Y^2-Y^1-Y^2(-)_3$, $-Y^2-Y^1(-Y^2-)_3$, $-Y^2-(Y^1-Y^2-)_3$, $-Y^2-Y^1-Y^2-Y^1(-)_3$, $-Y^2-Y^1-Y^2-(Y^1-)_3$,, $-Y^2-Y^1-(Y^2-Y^1-)_3$, $-Y^2-(Y^1-Y^2-Y^1-)_3$.

Preferred examples of Y include

$-Y^1-$, $-Y^1-Y^2-$, $-Y^1-Y^2-Y^1-$, $-Y^1-Y^2(-)_2$

and

$-Y^2-$, $-Y^2-Y^1-$, $-Y^2-Y^1-Y^2-$, $-Y^2-Y^1(-)_2$.

(Preferred example of Y)

Y is preferably

$-O-Y^{11}-$

or

$-O-Y^{11}-Y^{21}-Y^{12}-$

[wherein, independently at each occurrence,

$Y^{11}$ is a direct bond, -C(=O)-, -C(=O)-NR'- or -C(=S)-NR'-,
$Y^{21}$ is a hydrocarbon group having 1 to 40 carbon atoms and optionally having a substituent, and
$Y^{12}$ is -O-, -O-C(=O)-, -O-C(=O)-O-, -O-C(=O)-NR'-, -NR'-, - NR'-C(=O)-, -NR'-C(=O)-O-, -NR'-C(=O)-NR'-, -C(=O)-, -C(=O)-O-, - C(=O)-NR'-, $-SO_2-$, $-SO_2NR'-$, -C(OR')R'-, or $-C(OR')(-)_2$].
$Y^1$ is a non-hydrocarbon linker, and is a direct bond or divalent or higher valent group.

$Y^{11}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{11}$ is a direct bond, -C(=O)-, -C(=O)-NR'- or -C(=S)-NR'-.

$Y^{21}$ is a divalent hydrocarbon linker and may be a hydrocarbon group having 1 to 40 carbon atoms.

$Y^{21}$ may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear, and may be a saturated or unsaturated (e.g., saturated) aliphatic hydrocarbon group. The hydrocarbon group may have a substituent. Examples of substituents include - OR', $-N(R')_2$, -COOR', and a halogen atom, (wherein R' is independently at each occurrence a hydrogen atom or an organic group having 1 to 30, 1 to 20, 1 to 10, or 1 to 4 carbon atoms (such as a hydrocarbon group, in particular an aliphatic hydrocarbon group)). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.

Specific examples $Y^{21}$ include:

- $(CH_2)_p-$ (p is 1 to 40, 1 to 20, or 1 to 10),

  a linear hydrocarbon group having 1 to 40, 1 to 20, or 1 to 10 carbon atoms and having an unsaturated bond,
  a branched hydrocarbon group having 1 to 40, 1 to 20, or 1 to 10 carbon atoms, and

- $(CH_2)_q-Cy-(CH_2)_r-$ (q and r are each independently 0 to 20, for example, 1 to 10, and Cy is a hydrocarbon aromatic ring

or a heterocyclic ring).

$Y^{12}$ may be -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, $-SO_2-$, $-SO_2NR'-$, -C(OR')R'- or $-C(OR')(-)_2$.

[Z]

Z is a monovalent hydrocarbon group having 1 or more and 40 or less (for example, 20 or more and 40 or less) carbon atoms and optionally having a substituent. The same explanation in the above monovalent hydrocarbon group optionally having a substituent applies. The hydrocarbon group has preferably 6 or more, 8 or more, 10 or more, 12 or more, 14 or more, 16 or more, or 18 or more carbon atoms, and preferably 30 or less, 25 or less, 20 or less, 15 or less, or 10 or less carbon atoms. The hydrocarbon group may also have an unsaturated bond, and the number of unsaturated bonds is preferably 4 or less, 2 or less, or 1. The substituent is preferably OH (a hydroxy group).

[Other modifying groups]

The hydroxy group of polyol may be substituted by a modifying group other than $-Y-Z_n$. Examples of modifying groups include an anionic group and/ or a cationic group.
Examples of anionic groups include a monomer having a carboxyl group, a sulfonic acid group or a phosphoric acid group.
Examples of salts of the anionic group include alkaline metal salt, alkaline earth metal salt, or an ammonium salt such as methyl ammonium salt, ethanol ammonium salt and triethanol ammonium salt.
Examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group ($C_6H_5-CH_2-$)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group ($C_6H_5-CH_2-$)). In the tertiary amino group and the quaternary amino group, the last group bonded to the nitrogen atom may have a carbon-carbon double bond. The cationic group may be in the form of salt.
The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) are preferred.

[Production Method]

The modified body of polyol may be produced by reacting a modifying agent including a modifying group (or a precursor structure of the modifying group) with the hydroxy group of polyol.

(Polyol)

Polyol has two or more hydroxy groups and is a raw material of the modified body of polyol. Polyol has two or more hydroxy groups in the molecule. Polyol may be aliphatic or aromatic, and is preferably aliphatic.
Polyol may have an ether bond. Preferably polyol may have two or more ether bonds. More specifically, polyol is preferably a compound having two or more hydroxy groups and two or more ether bonds. In other words, polyol is preferably polyether having two or more hydroxy groups.
When polyol is a polymer, polyol may have a hydroxy group and an ether bond in the repeating structure of the monomer unit.
Polyol may be a low molecular weight compound (having a weight average molecular weight of, for example, less than 1,000 or 500 or less) and/or a high molecular weight compound. Polyol has a weight-average molecular weight of 50 or more, 100 or more, 300 or more, 500 or more, 1,000 or more, 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.
Polyol may have 2 or more, 5 or more, 7 or more, 10 or more, 15 or more, 30 or more, 50 or more, or 100 or more hydroxy groups, and 3,000 or less, 1,000 or less, 750 or less, 500 or less, 300 or less, 100 or less, 50 or less, 30 or less, or 20

or less hydroxy groups.

The hydroxy group equivalent of polyol may be 20 or more, 40 or more, 60 or more, 80 or more, 100 or more, 120 or more, or 150 or more, and 1,000 or less, 800 or less, 600 or less, 400 or less, 200 or less, 100 or less, or 75 or less Dividing the weight average molecular weight of polyol by the number of hydroxyl groups gives the hydroxy group equivalent of polyol.

Polyol may be a natural product. The natural product may be a high molecular weight natural product, a low molecular weight natural product, or a derivative thereof. The above natural product also includes a compound converted from microorganisms. Examples of polyol include a monosaccharide, an oligosaccharide, a polysaccharide, a sugar alcohol (reducing sugar), a hydroxy acid, an amino acid, vitamin, flavonol, hydroxyhydrocarbon, a polymer of a hydroxy group-containing compound, polyether polyol, polymer polyol, polyester polyol and other polyols.

Examples of monosaccharides include glucose, fructose, galactose and xylose.

Examples of oligosaccharides include sucrose, cycloamylose, cyclodextrin, maltose, trehalose, lactose and sucralose.

Examples of sugar alcohols (reducing sugar) include sorbitol, maltitol, erythritol, glycerin, isomalt, lactitol, mannitol, xylitol, sorbitan and lactitol.

Examples of polysaccharides include starch, cellulose, curdlan, pullulan, alginic acid, carrageenan, guar gum, chitin, chitosan, locust bean gum, kappa-carrageenan, iota-carrageenan, isomaltodextrin, gellan gum and tamarind seed gum.

Examples of hydroxy acids include ascorbic acid, kojic acid, quinic acid, chlorogenic acid and gluconic acid.

Examples of amino acids include glucosamine.

Examples of vitamins include ascorbic acid and inositol.

Examples of flavonols include catechin, quercetin and anthocyanin.

Examples of hydroxyhydrocarbons include ethylene glycol, propylene glycol, diethylene glycol, triethylene glycol, tetraethylene glycol, neopentyl glycol, trimethylene glycol, glycerol, trimethylolpropane and trimethylolethane. The hydroxyhydrocarbon are a hydrocarbon having a hydroxy group, and may be aliphatic or aromatic, and is preferably aliphatic. The term "hydroxyhydrocarbon" may also mean a hydroxyhydrocarbon other than the compounds included in a different group, such as polysaccharide (other hydroxyhydrocarbons).

Examples of polymers of a hydroxy group-containing compound include polyglycerol, polyvinyl alcohol, hydroxyethyl (meth)acrylate polymer, hydroxypropyl (meth)acrylate polymer and hydroxybutyl (meth)acrylate polymer.

Polyether polyol may be a compound obtained by addition polymerization of alkylene oxide onto an initiator. Examples of initiators include a bifunctional or higher functional compound having a hydroxyl group. Examples of initiators include propylene glycol, polypropylene glycol, ethylene glycol, polyethylene glycol, glycerol, polyglycerol, trimethylol propane, triethanolamine, pentaerythritol, ethylenediamine, aromatic diamine, diethylenetriamine, sorbitol and sucrose. Alkylene oxide include ethylene oxide and propylene oxide. The polyether polyol, which is obtained by addition polymerization of alkylene oxide onto the initiator, is also referred to as polyoxyalkylene polyol, or an oxyalkylene derivative of polyol. Typical examples of polyether polyol include polyoxypropylene triol obtained by addition polymerization of propylene oxide onto glycerol and polyoxypropylene polyglyceryl ether obtained by addition polymerization of propylene oxide onto polyglycerol.

An example of polymer polyol is a compound obtained by polymerizing at least a moiety of polyether polyol in the polyether polyol with an ethylenically unsaturated monomer. Examples of ethylenically unsaturated monomers include acrylonitrile and styrene.

An example of polyester polyol may be a compound obtained by dehydration condensation of a difunctional or higher functional compound having a carboxyl group and a difunctional or higher functional compound having a hydroxyl group. Examples of difunctional or higher functional compounds having a carboxyl group include terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methyltetrahydrophthalic acid, hexahydrophthalic acid and an acid anhydride thereof. Examples of difunctional or higher functional compounds having a hydroxyl group include ethylene glycol, propylene glycol, propanediol, neopentyl glycol, glycerol, trimethylolethane, trimethylolpropane, pentaerythritol and a polymer thereof.

(Modifying agent)

The modifying agent is preferably a compound which is reactive to polyol and comprises the above monovalent hydrocarbon group having 1 or more and 40 or less (for example, 20 or more and 40 or less) carbon atoms and optionally having a substituent.

Examples of modifying agents are as follows:

| | |
|---|---|
| Acid halide | G (O=) C-Z |
| Acid anhydride | $O(C(=O)-Z)_2$ |
| Carboxylic acidHO(O=) | C-Z |
| Isocyanate | O=C=N-Z |
| Thioisocyanate | S=C=N-Z |
| Epoxy | $(CH_2OCH)CH_2O$-Z |
| Halide | G-Z |
| Amine | $H_2N$-Z |
| Hydroxy | HO-Z |

[In the formula, Z is as described above, and G is a halogen atom (e.g., F, Cl, Br or I)].

Z in the structure of the above modifying agent may be replaced with any group constituting the modifying group. For example, Z may be a monovalent hydrocarbon group having 1 or more and 40 or less (for example, 20 or more and 40 or less) carbon atoms and optionally having a substituent, and Z may be $-Y-Z_n$.

The modified body of polyol may also be synthesized by reacting polyol and a modifying agent. For example, the modified body of polyol may be synthesized by forming an ester bond by reacting a modifying agent, which is an acid halide compound, acid anhydride or carboxylic acid, with the hydroxy group of polyol. Alternatively, the modified body of polyol may be produced by forming an ether bond by reacting a modifying agent, which is a halide compound or an epoxy compound, with the hydroxy group of polyol. Conditions of the reaction between polyol and the modifying agent may be suitably designed by a person skilled in the art, including use of a catalyst (e.g., acid catalyst and base catalyst) and use of a condensing agent depending on the intended product.

{Dispersant}

It is preferable that the repellent of the present disclosure comprises a dispersant.

The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant. The repellent may not include an anionic dispersant. The dispersant may comprise a dispersant other than a fatty acid ester having an HLB value of 7 or more. For example, the dispersant may comprise a fatty acid ester dispersant having an HLB of less than 7 or a dispersant other than fatty acid ester.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may have no fluorine.

[Nonionic dispersant]

The dispersant may comprise a nonionic dispersant. The nonionic dispersant may be a nonionic surfactant.

The nonionic dispersant may be of low molecular weight or high molecular weight. The nonionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5

hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

$$R^1O\text{-}(CH_2CH_2O)_p\text{-}(R^2O)_q\text{-}R^3$$

[wherein $R^1$ is an alkyl group having 1 to 22 carbon atoms, an alkenyl group or an acyl group, having 2 to 22 carbon atoms,
$R^2$ is each independently the same or different and is an alkylene group having 3 or more carbon atoms (for example, 3 to 10),
$R^3$ is a hydrogen atom, an alkyl group having 1 to 22 carbon atoms, or an alkenyl group having 2 to 22 carbon atoms,
p is a numeral of 2 or more,
q is 0 or a numeral of 1 or more.].

$R^1$ preferably has 8 to 20 carbon atoms, particularly 10 to 18 carbon atoms. Preferred examples of $R^1$ include an octyl group, a nonyl group, a trimethylnonyl group, a lauryl group, a tridecyl group, an oleyl group and a stearyl group.

$R^2$ is, for example, a propylene group and a butylene group.

In the nonionic dispersant, for example, p may be a numeral of 3 or more (for example, 5 to 200) and q may be a numeral of 2 or more (for example, 5 to 200). Namely, $-(R^2O)_q-$ may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane ($C_{12}$-$C_{16}$) thiol, a sorbitan monofatty acid ($C_7$-$C_{19}$), an alkyl ($C_{12}$-$C_{18}$) amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

[Cationic dispersant]

The dispersant may comprise a cationic dispersant. The cationic dispersant may be a cationic surfactant. The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group.

The cationic dispersant may be of low molecular weight or high molecular weight. The cationic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

The cationic dispersant may be an amine salt, quaternary ammonium salt, or oxyethylene-added ammonium salt. Specific examples of the cationic surfactant include, but are not limited to, amine salt type dispersants such as an alkylamine salt, amino alcohol fatty acid derivative, polyamine fatty acid derivative, and imidazoline; quaternary ammonium salt type dispersants such as an alkyltrimethylammonium salt, dialkyldimethylammonium salt, alkyldimethylbenzylammonium salt, pyridinium salt, alkylisoquinolinium salt, benzethonium chloride and benzalkonium chloride.

Preferred examples of the cationic dispersant are the compound represented by the formula:

$$R^{21}\text{-}N\text{+}(\text{-}R^{22})(\text{-}R^{23})(\text{-}R^{24})X^{-}$$

[wherein $R^{21}$, $R^{22}$, $R^{23}$, $R^{24}$ are each a hydrocarbon group having 1 to 40 carbon atoms, and X is an anionic group.].

Specific examples of $R^{21}$, $R^{22}$, $R^{23}$, $-R^{24}$ are alkyl groups (for example, a methyl group, a butyl group, a stearyl group, and a palmityl group). Specific examples of X are halogen (for example, chlorine) and acids (hydrochloric acid and acetic acid).

The cationic dispersant is particularly preferably a monoalkyltrimethylammonium salt (with an alkyl having 4 to 40 carbon atoms).

The cationic dispersant is preferably an ammonium salt. The cationic dispersant may be, for example, an ammonium salt represented by the formula:

$$R^1_p\text{-}N^+R^2_qX^-$$

[wherein $R^1$ is a C12 or more (for example $C_{12}$ to $C_{50}$) linear and/or branched aliphatic (saturated and/or unsaturated) group,
$R^2$ is H or a C1 to C4 alkyl group, a benzyl group, a polyoxyethylene group (the number of oxyethylene group is, for example, 1 (particularly 2, especially 3) to 50),
and is particularly preferably $CH_3$ and $C_2H_5$,
X is a halogen atom (for example) and a $C_1$ to $C_4$ fatty acid base,
p is 1 or 2, q is 2 or 3, and p + q=4.].

The number of carbon atoms of $R^1$ may be 12 to 50, for example, 12 to 30.

Specific examples of the cationic dispersants include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl] oleamide hydrochloride.

[Anionic dispersant]

The dispersant may comprise an anionic dispersant. The anionic dispersant may be an anionic surfactant. The dispersant may not include an anionic dispersant.

The anionic dispersant may be of low molecular weight or high molecular weight. The anionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an $\alpha$-sulfone fatty acid salt, a N-acylamino acid dispersant, a phosphate mono- or diester dispersant, and a sulfosuccinic acid ester.

[Amphoteric dispersant]

The dispersant may comprise an amphoteric dispersant. The amphoteric dispersant may be an amphoteric surfactant.

The amphoteric dispersant may be of low molecular weight or high molecular weight. The amphoteric dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

[Inorganic dispersant]

The dispersant may comprise an inorganic dispersant.

The inorganic dispersant has an average primary particle size of 5 nm or larger, 30 nm or larger, 100 nm or larger, 1 μm or larger, 10 μm or larger, or 25 μm or larger, and 100 μm or smaller, 50 μm or smaller, 10 μm or smaller, 1 μm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

[Amount of Dispersant]

The amount of dispersant may be 0.01 parts by weight or more, 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less 30 parts by weight or less, 20 parts by weight or less, 10 parts by weight or less, 5 parts by weight or less, 3 parts by weight or less, or 1 part by weight or less.

{Liquid medium}

The repellent in the present disclosure may comprise a liquid medium. The liquid medium may be water, an organic solvent, or a mixture of water and an organic solvent. The repellent may be a dispersion or a solution. The repellent in the present disclosure is in the form of a water dispersion, and may include at least water.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

[Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the modified body of polyol.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the modified body of polyol.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the modified body of polyol.

{Silicone}

The repellent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight-average molecular weight of the silicone may be 1,000 or more, 10,000 or more, or 50,000 or more. A weight-average molecular weight of the silicone may be 500,000 or less, 2,500,000 or less, 100,000 or less, or 50,000 or less.

[Amount of Silicone]

The amount of silicone is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Wax}

The repellent in the present disclosure may include wax. Containing the wax can impart favorable liquid-repellency to a substrate.

Examples of wax include paraffin wax, microcrystalline wax, Fischer-Tropsch wax, polyolefin wax (for example, polyethylene wax and polypropylene wax), oxidized polyolefin wax, silicone wax, animal and vegetable wax and mineral wax. Paraffin wax is preferred. Specific examples of compounds constituting wax include n-alkane (such as tricosan, tetracosane, pentacosane, hexacosane, heptacosan, octacosan, nonacosane, triacontane, hentriacontane, dotriacontane, tritriacontane, tetratriacontane, pentatriacontane, hexatriacontane), n-alkene (such as 1-icosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, hexatriacontane). The number of carbon atom in the compound constituting the wax is preferably 20 to 60, for example 25 to 45. A molecular weight of the wax may be 200 to 2,000, for example, 250 to 1,500 or 300 to 1,000. These may be used singly or in combination of two or more thereof.

The wax may have a melting point of 50°C or higher, 55°C or higher, 60°C or higher, 65°C or higher, or 70°C or higher, preferably 55°C or higher, more preferably 60°C or higher. The melting point of wax is measured according to JIS K 2235-1991.

[Amount of Wax]

The amount of wax may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Organic Acid}

The repellent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

[Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the repellent is 3 to 10, for example 5 to 9, particularly 6 to 8. For example, the repellent may be acidic (pH of 7 or less, for example 6 or less).

{Curing Agent}

The repellent of the present disclosure may contain a curing agent (active hydrogen-reactive compound or active hydrogen-containing compound).

The curing agent (cross-linking agent) in the repellent can effectively cure the modified body of polyol. The curing agent may be an active hydrogen-reactive compound or an active hydrogen-containing compound, which reacts with an active hydrogen or an active hydrogen-reactive group that the modified body of polyol has. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the repellent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

[Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

{Other Component}

The repellent may contain a component other than the aforementioned components. Examples of the other components include, for example, polysaccharides, a paper strengthening agent, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof.

In addition to the above components, as other components, for example, other water-repellent and/or oil-repellent agents, a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving

agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof.

[Polysaccharide]

Examples of polysaccharides include starch, xanthan gum, karaya gum, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan. Polysaccharide may be a substituted modified polysaccharide (excluding the modified body of polyol described above), and in particular, may be a modified polysaccharide into which a hydroxyl group or a cationic group is introduced.

[Paper Strengthening Improver, Agglomerating agent, Yield Improver or Coagulant]

Examples of the paper strengthening improver, agglomerating agent, yield improver or coagulant include, for example, a styrenic polymer (styrene/maleic acid polymer, styrene/acrylic acid polymer), a urea-formaldehyde polymer, a polyethyleneimine, a melamine-formaldehyde polymer, a polyamidoamine-epichlorohydrin polymer, a polyacrylamide-based polymer, a polyamine-based polymer, a polydiallyldimethylammonium chloride, a alkylamine ·epichlorohydrin condensate, a condensate of alkylene dichloride and polyalkylenepolyamine, a dicyandiamide formalin condensate, a dimethyldiallylammonium chloride polymer, and an olefin/maleic anhydride polymer.

[Sizing Agent]

Examples of the sizing agent include a cellulose-reactive sizing agent, for example, a rosin-based sizing agent such as rosin-based soap, rosin-based emulsion/a dispersion, a cellulose-reactive sizing agent, for example, emulsion/-dispersions of acid anhydrides such as alkyl and alkenyl succinic anhydrides (ASA), an alkenyl and alkyl ketene dimers (AKD) and multimers thereof, and anionic, cationic and amphoteric polymers of ethylenically unsaturated monomers, for example, a styrene and acrylate copolymer.

[Antistatic Agent]

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. For example, an ion conductive polymer obtained by polymerizing or copolymerizing a monomer having an ion conductive group of the cationic, anionic, or amphoteric antistatic agent, may be used. These may be used singly or in combination of two or more thereof.

[Antiseptic Agent]

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol.

[Ultraviolet Absorber]

The ultraviolet absorber is an agent that has a protection effect against ultraviolet rays, and is a component that

absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

[Antibacterial Agent]

The antibacterial agent is a component that exhibits the effect of inhibiting bacteria from growing on fibers and further exhibits the effect of inhibiting generation of unpleasant odors derived from decomposition products of microorganisms. Examples of the antibacterial agents include, for example, cationic antibacterial agents such as a quaternary ammonium salt, bis-(2-pyridylthio-1-oxide) zinc, a polyhexamethylene biguanidine hydrochloride salt, 8-oxyquinoline, and a polylysine.

[Deodorant]

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

[Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the modified body of polyol, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

<Production Method of Treated Textile Product or Paper Product>

A method for producing a product treated with the repellent in the present disclosure includes a treatment step of treating a substrate with the repellent described above.

The "treatment" refers to applying the repellent to a substrate by dipping, spraying, coating or the like. By the treatment, the active ingredient of the repellent, i.e., the modified body of polyol, is adhered to the inside and/or the surface of the substrate. Herein, the adhesion may be physical adhesion or chemical adhesion, and for example, the modified body of polyol may be physically or chemically modified (by reaction) onto a hydroxyl group of a substrate (for example, fiber, paper and glass) .

[Substrate]

Substrates to be treated with the repellent in the present disclosure are not limited, and are preferably a textile product or a paper product, and in particular, a paper product.

The repellent in the present disclosure imparts liquid-repellency to a substrate (e.g., fiber substrate, paper substrate), and may function as at least one selected from a water-repellent agent, an oil-repellent agent, an oil-resistant agent and a water-resistant agent. The substrate which has been treated with the repellent in the present disclosure, for example, is an oil-repellent paper or a water-repellent paper.

Examples of the substrate for textile products include animal and vegetable natural fibers such as cotton, linen, wool, and silk, synthetic fibers such as a polyamide, a polyester, a polyvinyl alcohol, a polyacrylonitrile, a polyvinyl chloride, and a polypropylene, and semi-synthetic fibers such as rayon and acetate, inorganic fibers such as a glass fiber, a carbon fiber, and an asbestos fiber, or blended fibers thereof. The textile products include a woven fabric, a knitted fabric, a nonwoven fabric, fabric in the form of clothing (for example, water-repellent garments, for example, a raincoat) and carpets, and a fiber, yarn and intermediate fiber product (for example, a sliver or a crude yarn) in a state of before being formed into fabric, may undergo treatment.

Examples of the substrate for paper products include, for example, bleached or unbleached chemical pulp such as kraft pulp or sulfite pulp, bleached or unbleached high-yield pulp such as groundwood pulp, mechanical pulp, or thermomechanical pulp, paper made from wastepaper pulp such as wastepaper of newspapers, magazines, and cardboard, and deinked wastepaper, a container made of paper, and a molded product made of paper. Specific examples of the paper products include, for example, a food packaging material, a food container, gypsum liner board base paper, coated base paper, medium-quality paper, a general liner and core, neutral pure white roll paper, a neutral liner, a rust-proof

liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (mold container), and suitable examples thereof include the food packaging material and the food container.

A substrate to be treated with the repellent of the present disclosure is not limited to textile products or paper products, and it may also include, for example, stone, a filter (for example, an electrostatic filter), a dust-protective mask, fuel cell parts (for example, a gas diffusion electrode and a gas diffusion support), glass, wood, leather, fur, asbestos, brick, cement, metal and oxide, a ceramic product, a plastic, a painted surface, and a plaster.

When the substrate is glass, a glass product to be produced may be an optical member. A certain layer (or film), such as a hard coat layer or an antireflection layer, may be formed on the surface (outermost layer) of a glass substrate. The antireflection layer may be any of a single-layer antireflection layer and a multi-layer antireflection layer. Examples of inorganic substances usable in the antireflection layer include $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$, and $WO_3$. One of these inorganic substances may be used singly, or two or more may be used in combination (e.g., as a mixture). In the case of a multi-layer antireflection layer, $SiO_2$ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

[Treatment Method]

The repellent of the present disclosure can be applied to a substrate as a treatment agent (particularly a surface-treating agent) by a conventionally known method. The treatment method may be a method for dispersing the repellent in the present disclosure in an organic solvent or water, if necessary, to dilute it and allowing it to adhere to an inside of a substrate and/or on a surface thereof by a known method such as dip coating, spray coating, and foam coating. After drying, a product to which a solid component of the repellent has been adhered, is obtained. If necessary, the repellent of the present disclosure may be applied in combination of a suitable cross-linking agent, and curing may be carried out. If necessary, the repellent of the present disclosure can be further combined for use with various additives such as water- and/or oil-repellent agents, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent. Examples of the various additives may be the same as those explained in the section "Other Component" described above. A concentration of the repellent in a treatment agent brought into contact with a substrate may be appropriately changed depending on its use, and may be 0.01 to 10% by weight, for example 0.05 to 5% by weight.

The repellent can be applied to a substrate by any of methods known for treating a substrate with liquid. The substrate may be immersed in the repellent, or solution may be adhered or sprayed onto the substrate. The treated substrate is preferably dried and cured by heating in order to develop liquid-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes. When the textile product is paper, the paper may undergo coating, or solution may be adhered or sprayed onto the paper, or the solution may be mixed with pulp slurry before papermaking to undergo treatment. The treatment may be external addition treatment or internal addition treatment. Alternatively, the repellent may be applied to a textile product by a cleaning method, and for example, it may be applied to a textile product in, for example, washing application or a dry cleaning method.

[Paper product Treatment]

Examples of paper substrates include paper, a container made of paper, and a molded product made of paper (for example, a pulp mold). The modified body of polyol of the present disclosure can adhere well to the paper substrate.

The paper can be produced by a conventionally known papermaking method. An internal addition treatment method in which the repellent is added to pulp slurry before papermaking, or an external addition treatment method in which the repellent is applied to paper after papermaking, can be employed.

A size press used in an external addition treatment method, can be divided into the following types depending on a coating method.

One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size

press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

The internal addition treatment method may refer to a treatment method for adding the repellent to pulp slurry before papermaking. The internal addition treatment method may include, but is not limited to, one or more of a step of adding the repellent to pulp slurry and stirring and mixing them; a step of sucking and dehydrating the pulp composition prepared in the step through a net-like body of predetermined shape and depositing the pulp composition then to form a pulp mold intermediate; and a step of molding and drying the pulp mold intermediate by using a heated molding mold to obtain paper, a container made of paper, and a molded product made of paper. After having been lightly dried at room temperature or elevated temperature, the treated paper may be arbitrarily subjected to heat treatment, depending on the nature of the paper. Temperature of the heat treatment may be 150°C or higher, 180°C or higher, or 210°C or higher, and may also be 300°C or lower, 250°C or lower, or 200°C or lower, particularly 80°C to 180°C. Carrying out the heat treatment in such a temperature range enables exhibiting, for example, excellent oil resistance and water resistance.

The present disclosure can be used, for example, in gypsum liner board base paper, coated base paper, medium-quality paper, a general liner and core, neutral pure white roll paper, a neutral liner, a rust-proof liner, and metal pasted paper, and kraft paper. The present disclosure can also be used, for example, in neutral printing writing paper, neutral coated base paper, neutral PPC paper, neutral thermal paper, neutral pressure-sensitive base paper, neutral inkjet paper and neutral information paper.

As pulp raw materials, any of bleached or unbleached chemical pulp such as kraft pulp or sulfite pulp; bleached or unbleached high-yield pulp such as groundwood pulp, mechanical pulp, or thermomechanical pulp; and wastepaper pulp such as wastepaper of newspapers, magazines, and cardboard, or deinked wastepaper, can be used. Moreover, a blend of the aforementioned pulp raw material and a synthetic fibers such as asbestos, a polyamide, a polyimide, a polyester, a polyolefin, or a polyvinyl alcohol, can also be used.

A sizing agent can be added to improve water resistance of paper. Examples of the sizing agent are a cationic sizing agent, an anionic sizing agent, and a rosin-based sizing agent (for example, an acidic rosin-based sizing agent and a neutral rosin-based sizing agent). The amount of sizing agent may be 0.01 to 5% by weight relative to pulp.

For paper, as chemicals for papermaking used to such an extent that they are usually used, if necessary, paper strengthening agents such as starch, modified starch, carboxymethyl cellulose, and a polyamide polyamine-epichlorohydrin resin, and additives used in production of paper, such as an agglomerating agent, a fixing agent, a yield improver, a dye, a fluorescent dye, a slime control agent, and an antifoaming agent, can be used. Starch and modified starch are preferably used. If necessary, paper can be coated with the repellent together with starch, a polyvinyl alcohol, a dye, a coating color, an anti-slip agent, or the like, for example, by a size press, a gate roll coater, a bill blade coater, a calender, or the like.

In external addition, the amount of modified body of polyol contained in a coating layer is preferably 0.01 to 2.0 $g/m^2$ and particularly 0.1 to 1.0 $g/m^2$. The coating layer is preferably formed of the repellent and starch and/or modified starch. The solid content of the repellent for paper in the coating layer is preferably 2 $g/m^2$ or less.

In internal addition, the repellent is preferably mixed with pulp so that the amount of repellent is 0.01 to 50 parts by weight or 0.01 to 30 parts by weight, for example 0.01 to 10 parts by weight and particularly 0.2 to 5.0 parts by weight, relative to 100 parts by weight of pulp that forms paper.

In external addition, even when employing a so-called pound type two-roll size press treatment in which a treatment liquid is stored between rolls, and base paper is passed through the treatment liquid between the rolls at an arbitrary roll speed and nip pressure, oil-repellency can be imparted to paper.

In external addition treatment, a paper substrate may contain additives such as a sizing agent, a paper strengthening agent, an agglomerating agent, or yield improver or a coagulant. The additives may be nonionic, cationic, anionic or amphoteric. An ionic charge density of the additive may be -10,000 to 10,000 μeq/g, preferably -4,000 to 8,000 μeq/g, and more preferably - 1,000 to 7,000 μeq/g. The additive (solid content or active ingredient) such as a sizing agent, a paper strengthening agent, an agglomerating agent, a yield improver, or a coagulant may be generally used in an amount of 0.1 to 10% by weight (for example, 0.2 to 5.0% by weight) relative to pulp. In the case of a paper substrate containing a cationic additive (for example, a sizing agent, a paper strengthening agent, an agglomerating agent, a yield improver, or a coagulant), the repellent is preferably anionic.

In internal addition treatment, pulp slurry having a pulp concentration of 0.5 to 5.0% by weight (for example, 2.5 to

4.0% by weight) preferably undergo papermaking. The pulp slurry can be added with an additive (for example, a sizing agent, a paper strengthening agent, an agglomerating agent, a yield improver, or a coagulant) and the modified body of polyol. Examples of the additive (for example, a sizing agent, a paper strengthening agent, an agglomerating agent, a yield improver, or a coagulant) include an alkyl ketene dimer, an alkenyl succinic anhydride, a styrenic polymer (styrene/maleic acid polymer, styrene/acrylic acid-based polymer), a urea-formaldehyde polymer, a polyethyleneimine, a melamine-formaldehyde polymer, a polyamideamine-epichlorohydrin polymer, a polyacrylamide-based polymer, a polyamine-based polymer, a polydiallyldimethylammonium chloride, an alkylamine·epichlorohydrin condensate, a condensate of alkylene dichloride and polyalkylene polyamine, a dicyandiamide·formalin condensate, a dimethyldiallylammonium chloride polymer, and an olefin/maleic anhydride polymer.

[Pretreatment of Fiber Product]

The fiber product may be pretreated before being treated with the repellent of the present disclosure. Pretreatment of the fiber product enables imparting excellent fastness to a fiber product after treated with the repellent.

Examples of the pretreatment of fiber product include, for example, cationization treatment such as reaction with a reactive quaternary ammonium salt, anionization treatment such as sulfonation, carboxylation, and phosphorylation, acetylation treatment after the anionization treatment, benzoylation treatment, carboxymethylation treatment, graft treatment, tannic acid treatment, and polymer coating treatment.

A method for pretreating the fiber product is not limited, but the fiber product can be pretreated by a conventionally known method. A method for dispersing a pretreatment liquid in an organic solvent or water, if necessary, to dilute the pretreatment liquid and adhering it to an inside of the fiber product and/or on a surface thereof and drying the liquid by a known method such as dip coating, spray coating, or foam coating, may be employed. The pH, temperature, etc. of the pretreatment liquid may be adjusted according to an extent of treatment desired. As an example of the method for pretreating a fiber product, a method for pretreating a fiber product with the treatment agent described above will be described in detail.

The pretreatment method of a fiber product may involve a step of imparting a fiber with one or more functional groups (hereinafter sometimes referred to as "specific functional groups") selected from the group consisting of the monovalent group represented by $-SO_3M^1$ (wherein $M^1$ represents a monovalent cation) or the monovalent group represented by $-COOM^2$ (wherein $M^2$ represents a monovalent cation), and the monovalent group represented by $-O-P(O)(OX^1)(OX^2)$ (wherein $X^1$ and $X^2$ each independently represent a hydrogen atom or an alkyl group having 1 to 22 carbon atoms).

Examples of $M^1$ include H, K, Na, or an ammonium ion which may have a substituent. Examples of $M^2$ include H, K, Na, or an ammonium ion which may have a substituent. When $X^1$ or $X^2$ is an alkyl group, it is preferably an alkyl group having 1 to 22 carbon atoms and more preferably an alkyl group having 4 to 12 carbon atoms.

A fiber containing the above specific functional group (hereinafter sometimes referred to as a "functional group-containing fiber") can be prepared, for example, by the following method.

(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.

(ii) A fiber is prepared by directly introducing the above specific functional group into the material constituting the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. A form of the fiber material may be any form such as a fiber (tow, sliver, etc.), a yarn, a knitted fabric (including an interknitted fabric), a woven fabric (including an interwoven fabric), or a nonwoven fabric.

In the present embodiment, from the viewpoint of improving water-repellency of the obtained textile product, a fiber material containing a polyamide and a polyester as raw materials, is preferably used, and in particular, nylon such as nylon 6, or nylon 6,6, a polyester such as a polyethylene terephthalate (PET), a polytrimethyl terephthalate, or polylactic acid, and blended fibers containing these, are preferably used.

A Phenolic polymer can be used as the compound having $-SO_3M^1$ described above. Examples of such a phenolic polymer include that containing at least one of compounds represented by the following general formula:

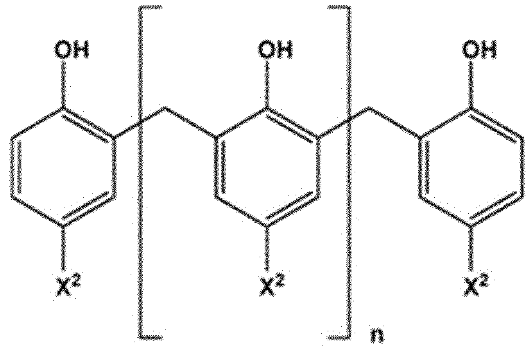

[wherein $X^2$ represents $-SO_3M^3$, wherein $M^3$ represents a monovalent cation, or a group represented by the following general formula, and n is an integer of 20 to 3,000.]

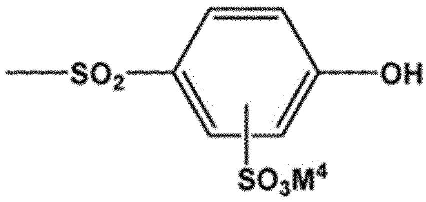

[wherein $M^4$ represents a monovalent cation.].

Examples of $M^3$ includes H, K, Na or an ammonium ion that may have a substituent.

Examples of $M^4$ includes H, K, Na or an ammonium ion which may have a substituent.

The compounds represented by the general formula above may be, for example, formalin condensates of phenol sulfonic acid and formalin condensates of sulfonated bisphenol S.

Examples of the compound having $-COOM^2$ above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may be added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, an acrylamide, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, propyl methacrylate, and the like. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, lithium, and the like, and examples of the amine-based compound include ammonia, monoethanolamine, diethanolamine, triethanolamine, and the like.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available products such as "Neocrystal 770" (trade name, manufactured by NICCA CHEMICAL CO., LTD.) and "Ceropol PC-300" (trade name, manufactured by Sanyo Chemical Industries, Ltd.) can be used.

Examples of the compound having $-O-P(O)(OX^1)(OX^2)$ as described above include phosphoric acid ester

compounds represented by the following general formula:

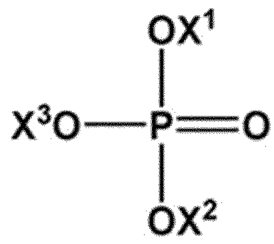

[wherein, $X^1$ or $X^2$ is the same as defined above, and $X^3$ represents an alkyl group having 1 to 22 carbon atoms.]

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specified functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of compound having the above specified functional group adhered is 1.0 to 7.0 parts by weight relative to 100 parts by weight of a fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include, for example, sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the

favorable texture. The resulting functional group-containing fiber is preferably fully dried prior to contact with the treatment agent described above.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of -100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

Embodiments have been described above, but it will be understood that various modifications can be made to embodiments and details without departing from the spirit and the scope of the claims.

Examples

The present disclosure will be described in more detail below by way of Examples, but the present disclosure is not limited to these Examples.

<Test Method>

The test procedures are as follows.

[Volume abundance ratio of particle of 100 μm or more]

The volume abundance ratio was calculated by dividing the abundance of the particles with a size of 100 μm or more by the abundance of all particles in the particle size distribution of the water-dispersible repellent obtained by the measurement by a laser diffraction/scattering apparatus. More specifically, the volume abundance ratio was calculated by the following equation.

Volume abundance ratio of particles with a size of 100 μm or more = [abundance of particles with a size of 100 μm or more] / [abundance of all particles] * 100

[Median diameter D50]

The median diameter D50 was determined by the measurement using a laser diffraction/scattering apparatus.

[Differential scanning calorimetry of modified body of polyol]

The maximum endothermic peak temperature, the melting point, the crystallization temperature and the glass transition temperature of the modified body of polyol were calculated by differential scanning calorimetry (DSC). In the DSC measurement, the modified body of polyol was cooled to -20°C under nitrogen atmosphere, and then endothermic peaks observed in the subsequent process of temperature increase to 180°C at 10°C/ minute were measured. If several melting peaks appear, a peak with the largest amount of heat absorbed was determined as the maximum endothermic peak, and the temperature of the top of the peak was defined as the maximum endothermic peak temperature. The amount of heat absorbed was determined by calculating the amount of heat in the range ±10°C of the endothermic peak temperature.

[Differential scanning calorimetry of solid component obtained by removing liquid medium from repellent]

The maximum endothermic peak temperature, the melting point, the crystallization temperature and the glass transition temperature of the solid component obtained by removing a liquid medium from the repellent were calculated by differential scanning calorimetry (DSC). The liquid medium was removed from the repellent by drying the repellent at 150°C for 1 hour.

In the DSC measurement, the solid component was cooled to - 20°C under nitrogen atmosphere, and then endothermic peaks observed in the subsequent process of temperature increase to 180°C at 10°C/ minute were measured. If several endothermic peaks appear, an endothermic peak at the highest temperature was determined as the maximum endothermic peak, and the temperature of the top of the peak was defined as the maximum endothermic peak temperature. The amount of heat absorbed was determined by calculating the amount of heat in the range ±10°C of the endothermic peak temperature.

[Temperature variable X-ray diffractometry of solid component obtained by removing a liquid medium from repellent]

The crystallization state of the solid component obtained by removing a liquid medium from the repellent was measured by an X-ray diffraction method (XRD) using SmartLab made by Rigaku Corporation. CuKα was used as the light source. In the temperature variable XRD (XRD-DSC) measurement, the solid component was cooled to -20°C under nitrogen atmosphere, and then the temperature was increased to 25°C or 55°C at 5°C/ minute, and the measurement was performed after keeping the solid component for 5 minutes.

For the full width at half maximum of the peak, the width of the 2θ for a peak at an intensity at the midpoint between the baseline and the top of the peak was determined as the full width at half maximum of the peak.

The ratio of diffraction intensity [$A_{55°C}/A_{25°C}$] was calculated as follows.

The diffraction intensity at the maximum point in the range of 2θ of 15° to 35° at a measurement temperature of 25°C was defined as [peak intensity $A_{25°C}$]. The diffraction intensity at the maximum point in the range of 2θ of 15° to 35° at a measurement temperature of 55°C was defined as [peak intensity $A_{55°C}$]. The ratio of diffraction intensity was calculated by dividing [peak intensity $A_{55°C}$] by [peak intensity $A_{25°C}$] as in the following equation.

Ratio of diffraction intensity [$A_{55°C}$/ $A_{25°C}$] = [peak intensity $A_{55°C}$] / [peak intensity $A_{25°C}$]

The liquid medium was removed from the repellent by drying at 150°C for 1 hour.

[HD contact angle]

A silicon wafer was coated with solution (or dispersion) of a modified body of polyol with a solid concentration of 1.0% under the conditions of 2,500 rpm for 25 seconds to obtain a spin-coated film. This was then heated at 140°C for 1 minute to obtain a silicon wafer treated with the modified body of polyol. Chloroform was used as the solvent or the dispersion medium. 2 μL of HD (hexadecane) was dropped onto the silicon wafer treated with the modified body of polyol, and the contact angle one second after the drop was taken as the HD contact angle of the modified body of polyol.

[Water contact angle]

A spin-coated film was prepared by spin-coating a solution (or a dispersion) of a modified body of polyol with a solid concentration of 1.0% on a silicon water at 2,500 rpm for 25 seconds. The spin-coated film was heated at 140°C for 1 minute to give a silicon wafer treated with the modified body of polyol. Chloroform was used as the solvent or the dispersion medium. 2 μL of water was dropped on the silicon wafer treated with the modified body of polyol, and the contact angle one second after the droplet reached the film was determined as the water contact angle of the modified body of polyol.

[Preparation of Pulp Mold]

A pulp mold was formed by using an automatic mold molding machine. In the lower part thereof, a reticular body was arranged on a pulp mold molding mold made of metal with many suction holes, a metal tank was arranged in the upper part, and a mixture of pulp slurry and the water-dispersible repellent was charged in the upper metal tank. From the opposite side of the pulp mold molding mold to the side where the reticular body was arranged, a pulp-containing aqueous composition was suctioned and dehydrated through the pulp mold molding mold and the reticular body by a vacuum pump, and solids (pulp, etc.) contained in the pulp-containing aqueous composition were allowed to deposit on the reticular body to obtain a pulp mold intermediate. The resulting pulp mold intermediate was then dried from by applying pressure of 0.05 to 5 MPa thereto from the tops and bottoms of male and female molding molds made of metal, which have been heated to 60 to 250°C. This produces a pulp mold molded into a shape of a container.

[Oil-resistance test at 65°C]

After pouring 100 ml of corn oil at 65°C into the pulp mold and allowing it to stand at room temperature for 45 minutes, the corn oil was removed from the pulp mold, and a degree of staining in the pulp mold was evaluated. The evaluation scores were set as follows according to the degree of staining.

5: No stains inside the pulp mold.
4: Stains inside the pulp mold. No stains on the backside.
3: Stains inside the pulp mold. Slight stain bleeding out to the backside.
2: Stains inside the pulp mold. The area of stain bleeding out to the backside is less than 50% of the total area.

1: Stains inside the pulp mold. The area of stain bleeding out to the backside is 50% or more and less than 100% of the total area.
0: Stains over the backside.

[Oil-resistance test at room temperature]

After pouring 100 ml of corn oil at 25°C into the pulp mold and allowing it to stand at room temperature for 45 minutes, the corn oil was removed from the pulp mold, and a degree of staining in the pulp mold was evaluated. The evaluation scores were set as follows according to the degree of staining.

5: No stains inside the pulp mold.
4: Stains inside the pulp mold. No stains on the backside.
3: Stains the inside the pulp mold. Slight stain bleed out on the backside.
2: Stains inside the pulp mold. The area of stain bleed out to the backside is less than 50% of the total area. 1: Stains inside the pulp mold. The area of stain bleed out to the backside is 50% or more and less than 100% of the total area.
0: Stains over the backside.

[Water-resistance test at 65°C]

After pouring 100 ml of water at 65°C into the pulp mold and allowing it to stand at room temperature for 45 minutes, the water was removed from the pulp mold and a degree of staining in the pulp mold was evaluated. The evaluation scores were set as follows according to the degree of staining.

5: No stains inside the pulp mold.
4: Stains inside the pulp mold. No stains on the backside.
3: Stains inside the pulp mold. Slight stain bleeding out to the backside.
2: Stains inside the pulp mold. The area of stain bleeding out to the backside is less than 50% of the total area.
1: Stains inside the pulp mold. The area of stain bleeding out to the backside is 50% or more and less than 100% of the total area.
0: Stains over the backside.

[Water-resistance test at room temperature]

After pouring 100 ml of water at 25°C into the pulp mold and allowing it to stand at room temperature for 45 minutes, the water was removed from the pulp mold and a degree of staining in the pulp mold was evaluated. The evaluation scores were set as follows according to the degree of staining.

5: No stains the inside the pulp mold.
4: Stains inside the pulp mold. No stains on the backside.
3: Stains inside the pulp mold. Slight stain bleed out to the backside.
2: Stains inside the pulp mold. The area of stain bleed out to the backside is less than 50% of the total area.
1: Stains inside the pulp mold. The area of stain bleed out to the backside is 50% or more and less than 100% of the total area.
0: Stains on the entire backside.

[Fabrication of treated paper]

A pulp slurry in which the weight ratio of LBKP (broad leaf tree bleached kraft pulp) was 60% by weight and the weight ratio of NBKP (needle bleached kraft pulp) was 40% by weight and in which the pulp had a freeness (Canadian Standard Freeness) of 400 ml was prepared as wood pulp. To the pulp slurry were added wet paper strength agent and a sizing agent, and paper having a paper density of 0.58 $g/cm^3$ and a basis weight of 45 $g/m^2$ was prepared by Fourdrinier machine and was used as a base paper for external addition (size press). The base paper had an oil resistance (KIT value) of 0 and a water resistance (Cobb value) of 52 $g/m^2$.

An operation of applying a treatment liquid prepared by dissolving the compound in chloroform at a proportion of 14.9 mg/ mL to the base paper by a Baker applicator whose gap was set to 0 mil and drying was repeated three times, and the resultant was dried at 140°C for 1 minute to give a treated paper.

[KIT test (oil resistance)]

Oil resistance was measured by 3M KIT test (TAPPI T-559cm-02). In the 3M KIT test method, test oil prepared by mixing castor oil, toluene and heptane was put on the surface of the treated paper, and when the test oil was wiped off after 15 seconds, the treated paper is evaluated for the presence or absence of oil staining. The test was performed using test oils of KIT Nos. 1 to 6, and the maximum KIT number without stain was regarded as the result of evaluation of oil resistance.

[Test for corn oil resistance (oil resistance)]

Corn oil was placed on a surface of the treated paper, and when the test oil was wiped off after 15 seconds, the treated paper is evaluated for the presence or absence of oil staining. In the case of no oil stains, it was evaluated as "○", and in the case of oil stains being observed, it was evaluated as "×".

[Results of measurement of HD contact angle and differential scanning calorimetry of modified body of polyol]

Table 1 shows the results of the measurement of the HD contact angle and differential scanning calorimetry (DSC) of decaglycerol dodecabehenyl ester (degree of polymerization: 10, hydroxy group substitution ratio: 12/12*100, biobased ratio: 100%) and decaglycerol heptabehenyl ester (degree of polymerization: 10, hydroxy group substitution ratio: 7/12*100) as modified bodies of polyol, decaglycerol decastearyl ester (degree of polymerization: 10, hydroxy group substitution ratio: 10/12*100) as a modified body of polyol, hexaglycerol pentastearyl ester (degree of polymerization: 6, hydroxy group substitution ratio: 5/8*100) as a modified body of polyol and tetraglycerol tristearyl ester (degree of polymerization: 4, hydroxy group substitution ratio: 3/6*100) as a modified body of polyol.

Example 1

2 g of decaglycerol dodecabehenyl ester (degree of polymerization: 10, hydroxy group substitution ratio: 12/12*100, biobased ratio: 100%), which was a modified body of polyol, 0.2 g of polyethylene oxide alkyl ether (in which alkyl has 6 to 16 carbon atoms, HLB: 7) and 17.8 g of water were mixed to give a precursor of water-dispersible repellent A. The precursor of water-dispersible repellent A was heated to 80°C and then allowed to cool with stirring by a magnetic stirrer to give a precursor of water-dispersible repellent B. The precursor of water-dispersible repellent B was treated twice in a high pressure wet pulverizer under a condition of 100 MPa to give a water-dispersible repellent. The resulting water-dispersible repellent had a volume abundance ratio of particles with a size of 100 μm or larger of 0% and a median diameter D50 of 6.1 μm.

The results of the differential scanning calorimetry and the temperature variable X-ray diffractometry of the solid component obtained by removing a liquid medium from the water-dispersible repellent are shown in Table 1.

The water-dispersible composition was added to pulp slurry with a concentration of 0.5% by weight so that the ratio of the repellent was 3.5% by weight in terms of solid content, relative to pulp, to prepare a pulp composition. The pulp composition was charged into an automatic mold molding machine to prepare a pulp mold.

The molded pulp was subjected to the oil-resistance test at 65°C and the water-resistance test at 65°C, which scored 4 points for oil resistance and 4 points for water resistance. The results are shown in Table 1. The molded pulp was also subjected to the oil-resistance test at room temperature and the water-resistance test at room temperature. The results are shown in Table 1.

Example 2

2 g of decaglycerol dodecabehenyl ester (degree of polymerization: 10, hydroxy group substitution ratio: 12/12*100, biobased ratio: 100%), which was a modified body of polyol, 0.2 g of polyethylene oxide trimethylnonyl ether (HLB: 13) and 17.8 g of water were mixed to give a precursor of water-dispersible repellent A. The precursor of water-dispersible repellent A was heated to 80°C and then stirred by a homogenizer at 7,000 rpm for 20 minutes to give a water-dispersible repellent. The volume abundance ratio of particles with a size of 100 μm or larger and the median diameter D50 of the resulting water-dispersible repellent, and the results of the differential scanning calorimetry and the temperature variable X-ray diffractometry of the solid component obtained by removing a liquid medium from the water-dispersible repellent are shown in Table 1.

The molded pulp was subjected to the oil-resistance test at 65°C and the water-resistance test at 65°C in the same manner as in Example 1, which scored 4 points for oil resistance and 4 points for water resistance. The results are shown in Table 1. The molded pulp was also subjected to the oil-resistance test at room temperature and the water-resistance test at room temperature. The results are shown in Table 1.

Example 3

2 g of decaglycerol heptabehenyl ester (degree of polymerization: 10, hydroxy group substitution ratio: 7/12*100, biobased ratio: 100%), which was a modified body of polyol, 0.2 g of polyethylene oxide trimethylnonyl ether and 17.8 g of water were mixed to give a precursor of water-dispersible repellent A. The precursor of water-dispersible repellent A was heated to 80°C and then stirred by a homogenizer at 7,000 rpm for 20 minutes to give a water-dispersible repellent. The volume abundance ratio of particles with a size of 100 μm or larger and the median diameter D50 of the resulting water-dispersible repellent, and the results of the differential scanning calorimetry and the temperature variable X-ray diffractometry of the solid component obtained by removing a liquid medium from the water-dispersible repellent are shown in Table 1.

The water-dispersible composition was added to pulp slurry with a concentration of 0.5% by weight so that the ratio of the repellent was 5% by weight in terms of solid content, relative to pulp, to prepare a pulp composition. The pulp composition was charged into an automatic mold molding machine to prepare a pulp mold. The molded pulp was subjected to the oil-resistance test at 65°C and the water-resistance test at 65°C, which scored 4 points for oil resistance and 4 points for water resistance. The molded pulp was also subjected to the oil-resistance test at room temperature and the water-resistance test at room temperature. The results are shown in Table 1.

Example 4

A water-dispersible repellent was prepared in the same manner as in Example 2 except for changing polyethylene oxide alkyl ether to benzalkonium chloride. The resulting water-dispersible repellent had a volume abundance ratio of particles with a size of 100 μm or larger of 1% and a median diameter D50 of 7.7 μm. The molded pulp was subjected to the oil-resistance test at 65°C and the water-resistance test at 65°C in the same manner as in Example 1, which scored 4 points for oil resistance and 4 points for water resistance.

Example 5

A water-dispersible repellent was prepared in the same manner as in Example 1. A pulp slurry in which the weight ratio of LBKP (hardwood bleached kraft pulp) was 60% by weight and the weight ratio of NBKP (softwood bleached kraft pulp) was 40% by weight and in which the pulp had a freeness (Canadian Standard Freeness) of 400 ml was prepared as wood pulp. To the pulp slurry were added wet paper strengthening agent and a sizing agent, and paper having a paper density of 0.58 g/cm$^3$ and a basis weight of 45 g/m$^2$ was prepared by Fourdrinier machine and was used as a base paper for external addition (size press treatment). The base paper had an oil resistance (KIT value) of 0 and a water resistance (Cobb value) of 52 g/m$^2$.

An operation of applying a treatment liquid prepared by dissolving the compound in chloroform at a proportion of 14.9 mg/ mL to the base paper by a Baker applicator whose gap was set to 7 mil and drying was repeated three times, and the resultant was dried at 140°C for 5 minute to give a treated paper.

The corn oil resistance of the treated paper was rated as "○ " and the treated paper had a KIT score of 4.

Example 6

A water-dispersible repellent was prepared in the same manner as in Example 1. 2.5 g of cationic starch and 47.5 g of water were mixed and the mixture was stirred at 60°C for 1 hour to give an aqueous cationic starch solution.

The water-dispersible repellent was added to pulp slurry with a concentration of 0.5% by weight so that the ratio of the repellent was 3.5% by weight in terms of solid content, relative to pulp, to prepare a pulp composition. Then the aqueous cationic starch solution was added thereto so that the ratio of the cationic starch in terms of solid content was 10% by weight, relative to pulp, to prepare a pulp composition. The pulp composition was charged into an automatic mold molding machine to prepare a pulp mold. The pulp mold was subjected to the oil-resistance test at room temperature, which scored 4 points for oil resistance.

Comparative Example 1

2 g of decaglycerol decastearyl ester (degree of polymerization: 10, hydroxy group substitution ratio: 10/12*100), which was a modified body of polyol, 0.2 g of polyethylene oxide trimethylnonyl ether and 17.8 g of water were mixed to give a precursor of water-dispersible repellent A. The precursor of water-dispersible repellent A was heated to 80°C and then stirred by a homogenizer at 7,000 rpm for 20 minutes to give a water-dispersible repellent. The volume abundance ratio of particles with a size of 100 μm or larger and the median diameter D50 of the resulting water-dispersible repellent, and the results of the differential scanning calorimetry and the temperature variable X-ray diffractometry of the solid component

obtained by removing a liquid medium from the water-dispersible repellent are shown in Table 1.

The molded pulp was subjected to the oil-resistance test at 65°C and the water-resistance test at 65°C in the same manner as in Example 3, which scored 0 points for oil resistance and 0 points for water resistance.

Comparative Example 2

A water-dispersible repellent was prepared in the same manner as in Comparative Example 1 except for changing the modified body of polyol to hexaglycerol pentastearyl ester (degree of polymerization: 6, hydroxy group substitution ratio: 5/8*100). The volume abundance ratio of particles with a size of 100 μm or larger and the median diameter D50 of the resulting water-dispersible repellent, and the results of the differential scanning calorimetry and the temperature variable X-ray diffractometry of the solid component obtained by removing a liquid medium from the water-dispersible repellent are shown in Table 1.

The molded pulp was subjected to the oil-resistance test at 65°C and the water-resistance test at 65°C in the same manner as in Example 3, which scored 0 points for oil resistance and 0 points for water resistance.

Comparative Example 3

A water-dispersible repellent was prepared in the same manner as in Comparative Example 1 except for changing the modified body of polyol to tetraglycerol tristearyl ester (degree of polymerization: 4, hydroxy group substitution ratio: 3/6*100). The volume abundance ratio of particles with a size of 100 μm or larger and the median diameter D50 of the resulting water-dispersible repellent, and the results of the differential scanning calorimetry and the temperature variable X-ray diffractometry of the solid component obtained by removing a liquid medium from the water-dispersible repellent are shown in Table 1.

The molded pulp was subjected to the oil-resistance test at 65°C and the water-resistance test at 65°C in the same manner as in Example 3, which scored 0 points for oil resistance and 0 points for water resistance.

Comparative Example 4

A water-dispersible repellent was prepared in the same manner as in Comparative Example 1 except for changing the modified body of polyol to glycerol tristearyl ester (degree of polymerization: 1, hydroxy group substitution ratio: 3/3*100). The volume abundance ratio of particles with a size of 100 μm or larger and the median diameter D50 of the resulting water-dispersible repellent, and the results of the differential scanning calorimetry and the temperature variable X-ray diffractometry of the solid component obtained by removing a liquid medium from the water-dispersible repellent are shown in Table 1.

The molded pulp was subjected to the oil-resistance test at 65°C and the water-resistance test at 65°C in the same manner as in Example 3, which scored 0 points for oil resistance and 0 points for water resistance.

[Table 1]

[Table 1. Results of evaluation of water-dispersible repellent]

| | Ex. 1 | Ex. 2 | Ex. 3 | Com. Ex. 1 | Com.Ex.2 | Com.Ex.3 | Com. Ex. 4 |
|---|---|---|---|---|---|---|---|
| Modified body of polyol | Deca glycerol dodeca behenyl ester | Deca glycerol dodeca behenyl ester | Deca glycerol hepta behenyl ester | Deca glycerol deca stearyl ester | Hexa glycerol penta stearyl ester | Tetra glycerol tristearyl ester | Glycerol tristearyl ester |
| | DDBE | DDBE | DHBE | DDSE | HPSE | TTSE | GTSE |
| HD contact angle | 42.0° | 42.0° | 40.5° | 39.8° | 41.9° | 39.6° | 23.2° |

(continued)

[Table 1. Results of evaluation of water-dispersible repellent]

| | Ex. 1 | Ex. 2 | Ex. 3 | Com. Ex. 1 | Com.Ex.2 | Com.Ex.3 | Com. Ex. 4 |
|---|---|---|---|---|---|---|---|
| Maximum endothermic peak temperature of modified body of polyol | 70.7°C | 70.7°C | 65.3°C | 51.3°C | 53.5°C | 53.1°C | 34.1°C |
| Amount of heat absorbed of modified body of polyol at maximum endothermic peak temperature (Jg-1) | 127.1 | 127.1 | 107.3 | 105.9 | 99.5 | 89.3 | 148 |
| Volume abundance ratio of particles with a size of 100 µm or larger | 0% | 0% | 19% | 0% | 0% | 0% | 0% |
| Median diameter D50 | 6.1µm | 20.2µm | 21.2µm | 13.1µm | 12.7µm | 6.6µm | 18.2µm |
| Oil-resistance test at 65°C | 4 | 4 | 4 | 0 | 0 | 0 | 0 |
| Oil-resistance test at room temperature | 4 | 4 | 4 | 4 | 4 | - | 1 |
| Water-resistance test at 65°C | 4 | 4 | 4 | 0 | 0 | 0 | 0 |
| Water-resistance test at room temperature | 4 | 4 | 4 | 4 | 4 | - | 1 |

(continued)

[Table 1. Results of evaluation of water-dispersible repellent]

| | Ex. 1 | Ex. 2 | Ex. 3 | Com. Ex. 1 | Com.Ex.2 | Com.Ex.3 | Com. Ex. 4 | |
|---|---|---|---|---|---|---|---|---|
| Maximum endothermic peak temperature of solid component obtained by removing liquid medium from repellent | 69.7°C | 69.8°C | 64.3°C | 50.2°C | 52.3°C | 53.0°C | 33.8°C | |
| Amount of heat absorbed of solid component obtained by removing liquid medium from repellent at maximum endothermic peak temperature (Jg-1) | 114.4 | 113.1 | 95.5 | 96.4 | 90.5 | 79.5 | 131.72 | |
| Diffraction angle (2θ) of maximim peak in the range of 15° to 30° in X-ray diffraction of solid component obtained by removing liquid medium from repellent | Measurement temperature : 25°C | 21.2° | 21.7° | 21.8° | 21.7 | 21.7 | 21.8 | 21.6° |
| | Measurement temperature : 55°C | 21.7° | 21.4° | 21.4° | 19.22 | 19.22 | 19.62 | 19.98° |
| Ratio of diffraction intensity [diffraction peak intensity at 55°C]/[diffraction peak intensity at 25°C] | | 1.58 | 1.54 | 2.11 | 0.36 | 0.37 | 0.32 | 0.06 |

**Claims**

**1.** A water-dispersible repellent comprising a modified body of polyol and a dispersant, wherein the water-dispersible repellent satisfies one or more of (1) and (2):

(1) in differential scanning calorimetry of the modified body of polyol or in differential scanning calorimetry of a solid component obtained by removing a liquid medium from the repellent, the maximum endothermic peak temperature in a temperature range of 25°C to 180°C is 55°C or more;

(2) the modified body of polyol has four or more monovalent hydrocarbon groups having 20 or more and 40 or less carbon atoms and optionally having a substituent.

**2.** The repellent according to claim 1, wherein, in the differential scanning calorimetry of the modified body of polyol, the maximum endothermic peak temperature in a temperature range of 25°C to 180°C is 55°C or more.

**3.** The repellent according to claim 1 or 2, wherein, in the differential scanning calorimetry of the solid component obtained by removing a liquid medium from the repellent, the maximum endothermic peak temperature in a temperature range of 25°C to 180°C is 55°C or more.

**4.** The repellent according to any one of claims 1 to 3, wherein a ratio of diffraction intensity between a peak intensity $A_{25°C}$ of the maximum peak at a measurement temperature of 25°C and a peak intensity $A_{55°C}$ of the maximum peak at a measurement temperature of 55°C [$A_{55°C}/A_{25°C}$] is 0.5 or more in the range of 2θ of 15° to 30° in temperature variable X-ray diffractometry of the solid component obtained by removing a liquid medium from the repellent.

**5.** The repellent according to any one of claims 1 to 4, wherein the modified body of polyol has four or more monovalent hydrocarbon groups having 20 or more and 40 or less carbon atoms and optionally having a substituent.

**6.** The repellent according to claim 5, wherein the monovalent hydrocarbon group having 20 or more and 40 or less carbon atoms and optionally having a substituent is an alkyl group.

**7.** The repellent according to any one of claims 1 to 6, wherein the modified body of polyol is a compound formed by replacing four or more hydroxy groups of polyol with a group represented by the following formula:

$$-Y-Z_n$$

wherein Y is a 1+n valent group composed of one or more selected from the group consisting of $Y^1$ and $Y^2$,
$Y^1$ is a group composed of one or more selected from the group consisting of a direct bond, -O-, -C(=O)-, -C(=NR')-, -S-, $-S(=O)_2-$, -NR'-, -C(OR')R'-, $-C(OR')(-)_2$ and $-N(-)_2$, wherein R' is independently at each occurrence a hydrogen atom or an organic group having 1 to 30 carbon atoms,
$Y^2$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z is a monovalent hydrocarbon group having 20 or more and 40 or less carbon atoms and optionally having a substituent, and
n is an integer of 1 or more and 3 or less.

**8.** The repellent according to claim 7, wherein Y is

$$-O-Y^{11}-$$

or

$$-O-Y^{11}-Y^{21}-Y^{12}-$$

wherein, independently at each occurrence,
$Y^{11}$ is a direct bond, -C(=O)-, -C(=O)-NR'- or -C(=S)-NR'-,
$Y^{21}$ is a hydrocarbon group having 1 to 40 carbon atoms and optionally having a substituent, and
$Y^{12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, - C(=O)-O-, -C(=O)-NR'-, $-SO_2-$, $-SO_2NR'-$, -C(OR')R'- or $-C(OR')(-)_2$.

**9.** The repellent according to any one of claims 1 to 8, wherein the polyol is a least one selected from the group consisting of a monosaccharide, an oligosaccharide, a polysaccharide, a sugar alcohol, a hydroxy acid, an amino acid, vitamin,

flavonol, hydroxyhydrocarbon and a polymer of a hydroxy group-containing compound.

**10.** The repellent according to any one of claims 1 to 9, wherein the polyol is at least one selected from the group consisting of:

glucose, fructose, galactose, xylose;
sucrose, cycloamylose, cyclodextrin, maltose, trehalose, lactose, sucralose;
sorbitol, maltitol, erythritol, isomalt, lactitol, mannitol, xylitol, sorbitan, lactitol;
starch, cellulose, curdlan, pullulan, alginic acid, carrageenan, guar gum, chitin, chitosan, locust bean gum, kappa-carrageenan, iota-carrageenan, isomaltodextrin, gellan gum, tamarind seed gum;
ascorbic acid, kojic acid, quinic acid, chlorogenic acid, gluconic acid;
glucosamine;
inositol;
catechin, quercetin, anthocyanin;
ethylene glycol, propylene glycol, diethylene glycol, triethylene glycol, tetraethylene glycol, neopentyl glycol, trimethylene glycol, glycerol, trimethylolpropane, trimethylolethane;
polyglycerol, polyvinyl alcohol, hydroxyethyl (meth)acrylate polymer, hydroxypropyl (meth)acrylate polymer and hydroxybutyl (meth)acrylate polymer.

**11.** The repellent according to any one of claims 1 to 10, wherein the repellent has a volume abundance ratio of particles with a size of 100 μm or larger of 25% or less as measured by laser diffraction scattering.

**12.** The repellent according to any one of claims 1 to 11, wherein the modified body of polyol has a biobased ratio of 20% or more.

**13.** The repellent according to any one of claims 1 to 12, wherein the modified body of polyol is a compound formed by replacing a hydroxy group of the polyol with a group represented by the following formula:

$$-Y-Z_n$$

wherein Y is

$$-O-Y^{11}-$$

or

$$-O-Y^{11}-Y^{21}-Y^{12}-$$

wherein, independently at each occurrence,
$Y^{11}$ is a direct bond, -C(=O)-, -C(=O)-NR'- or -C(=S)-NR'-,
$Y^{21}$ is a hydrocarbon group having 1 to 40 carbon atoms and optionally having a substituent, and
$Y^{12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, - C(=O)-O-, -C(=O)-NR'-, $-SO_2-$, $-SO_2NR'-$, -C(OR')R'- or $-C(OR')(-)_2$,
Z is a hydrocarbon group having 6 or more and 40 or less carbon atoms, and
n is an integer of 1 or more and 3 or less,
the polyol is at least one selected from the group consisting of:

glucose, fructose, galactose, xylose;
sucrose, cycloamylose, cyclodextrin, maltose, trehalose, lactose, sucralose;
sorbitol, maltitol, erythritol, isomalt, lactitol, mannitol, xylitol, sorbitan, lactitol;
starch, cellulose, curdlan, pullulan, alginic acid, carrageenan, guar gum, chitin, chitosan, locust bean gum, kappa-carrageenan, iota-carrageenan, isomaltodextrin, gellan gum, tamarind seed gum;
ascorbic acid, kojic acid, quinic acid, chlorogenic acid, gluconic acid;
glucosamine;
inositol;
catechin, quercetin, anthocyanin;

ethylene glycol, propylene glycol, diethylene glycol, triethylene glycol, tetraethylene glycol, neopentyl glycol, trimethylene glycol, glycerol, trimethylolpropane, trimethylolethane;
polyglycerol, polyvinyl alcohol, hydroxyethyl (meth)acrylate polymer, hydroxypropyl (meth)acrylate polymer and hydroxybutyl (meth)acrylate polymer, and
the modified body of polyol has a hydroxy group substitution ratio of 30% or more.

**14.** The repellent according to any one of claims 1 to 13, wherein the modified body of polyol is a compound formed by replacing a hydroxy group of polyglycerol having a degree of polymerization of 5 or more and 15 or less or a sugar alcohol with a group represented by the following formula:

-O-C(=O)-Z

or

-O-C(=O)NH-Z,

wherein Z is an alkyl group having 20 or more and 24 or less carbon atoms, and
the modified body of polyol has a hydroxy group substitution ratio of 50% or more.

**15.** The repellent according to any one of claims 1 to 14, which is for a textile product or a paper product.

**16.** A product treated with the repellent according to any one of claims 1 to 15.

**17.** The product according to claim 16, which is a textile product or a paper product.

**18.** The product according to claim 16 or 17, which is an oil-resistant paper or a water-resistant paper.

**19.** The product according to any one of claims 16 to 18, which is a food packaging material or a food container.

**20.** A method for producing a treated product, comprising treating a substrate with the repellent according to any one of claims 1 to 15.

**21.** The production method according to claim 20, wherein the treatment is internal addition treatment.

[Figure 1]

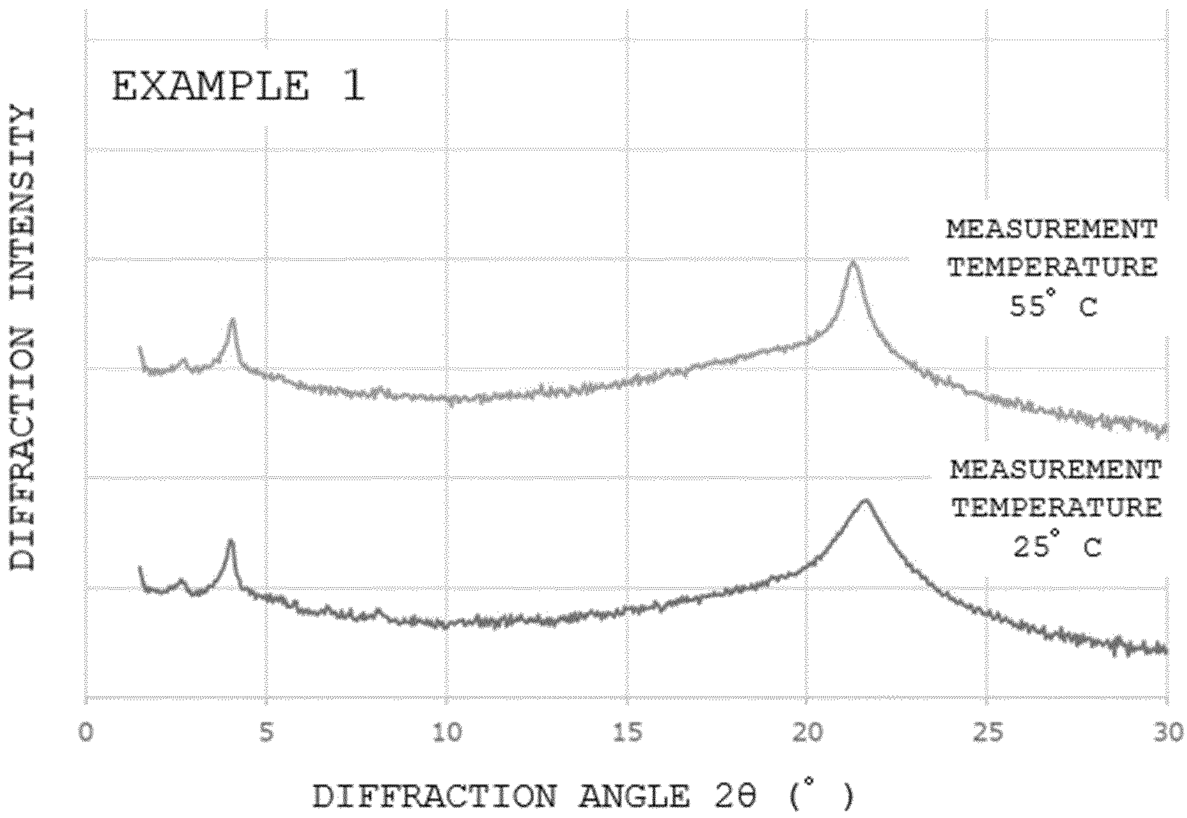


[Figure 2]

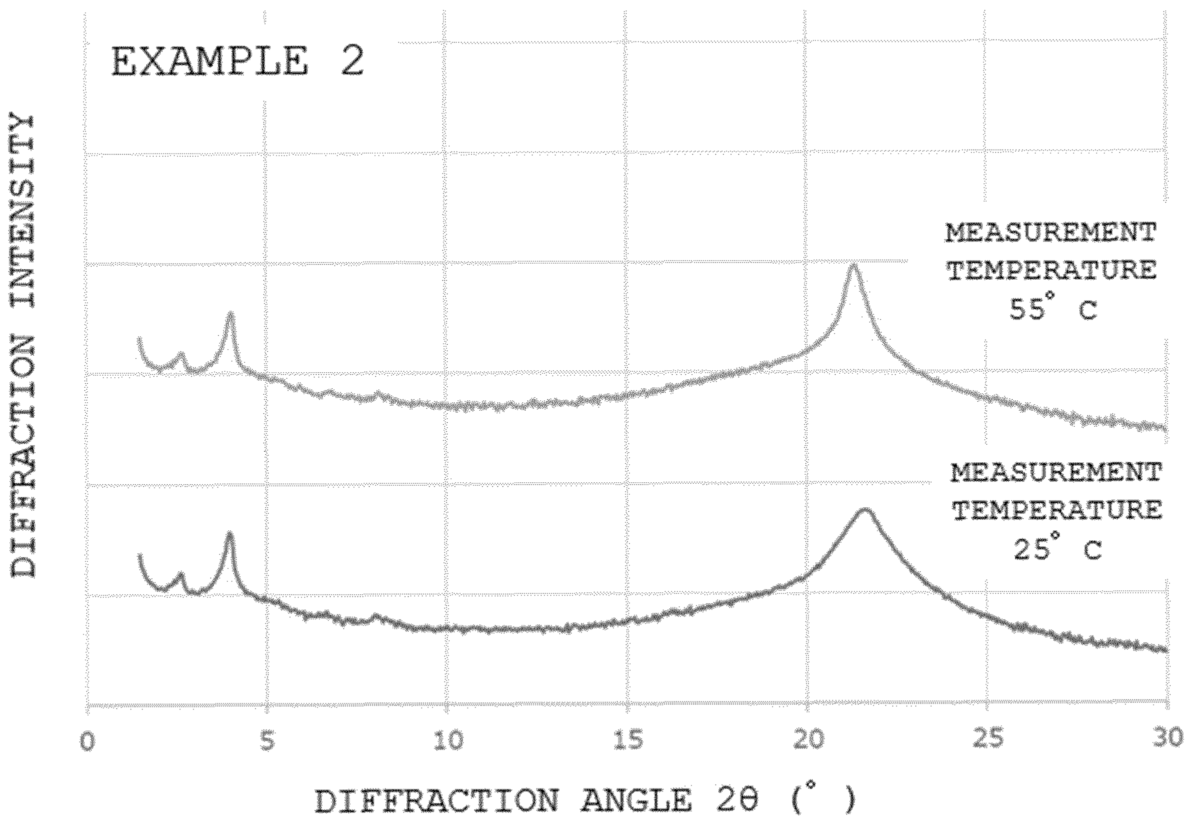
EXAMPLE 2
DIFFRACTION INTENSITY
MEASUREMENT TEMPERATURE 55° C
MEASUREMENT TEMPERATURE 25° C
0
5
10
15
20
25
30
DIFFRACTION ANGLE 2θ (° )

[Figure 3]

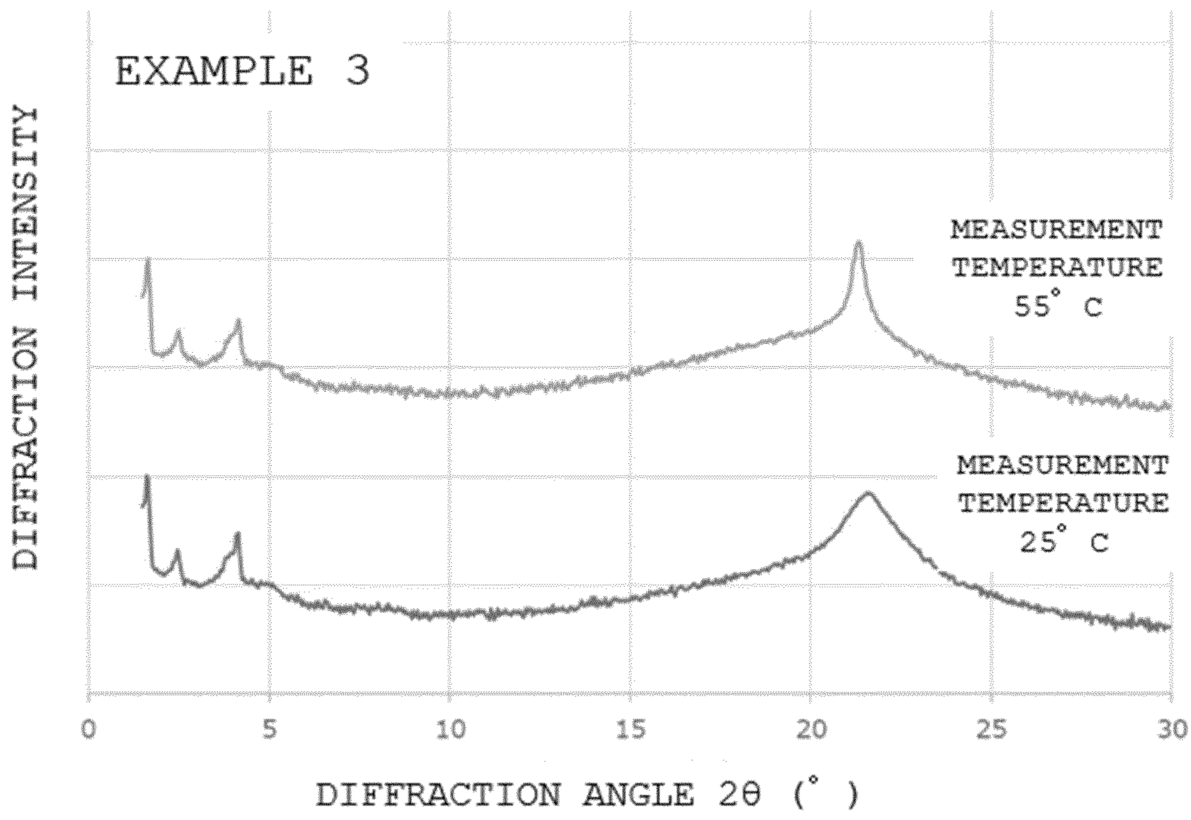
EXAMPLE 3
DIFFRACTION INTENSITY
MEASUREMENT TEMPERATURE 55° C
MEASUREMENT TEMPERATURE 25° C
0
5
10
15
20
25
30
DIFFRACTION ANGLE 2θ (° )

[Figure 4]

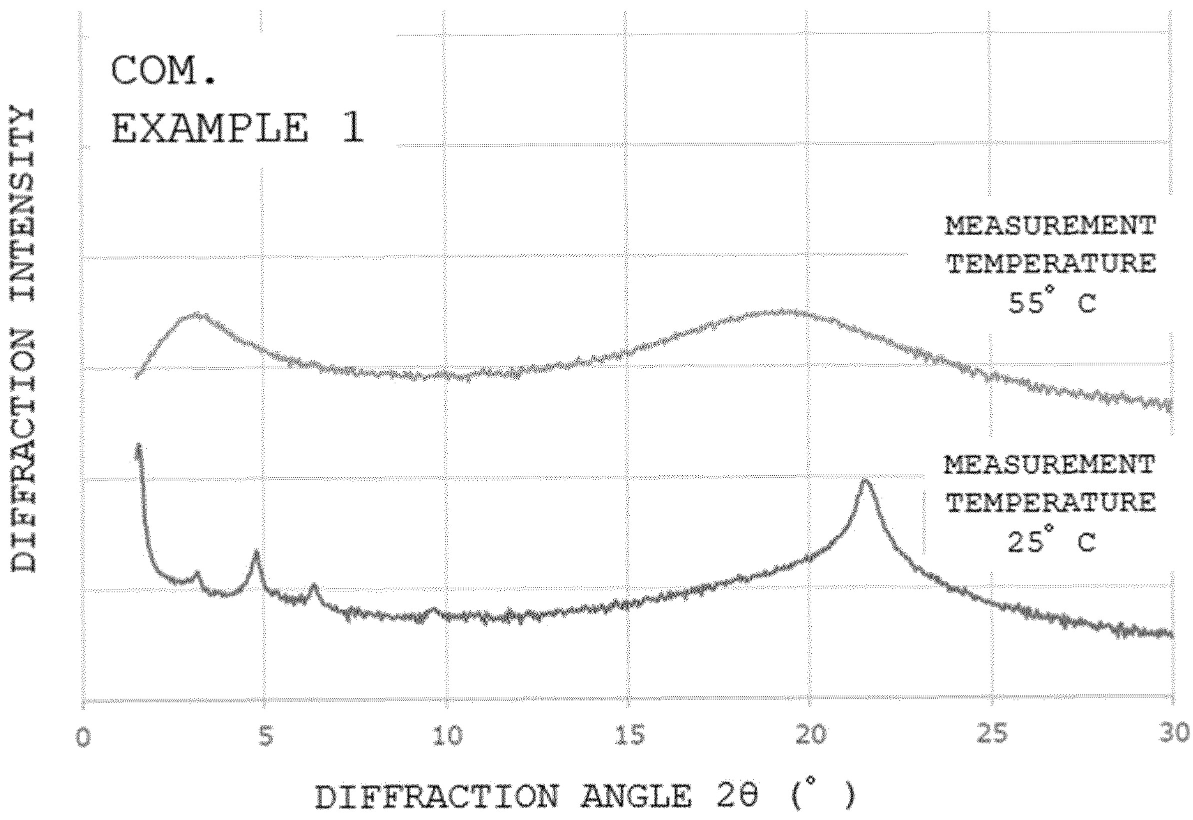
COM.
EXAMPLE 1
DIFFRACTION INTENSITY
MEASUREMENT
TEMPERATURE
55° C
MEASUREMENT
TEMPERATURE
25° C
0
5
10
15
20
25
30
DIFFRACTION ANGLE 2θ (° )

[Figure 5]

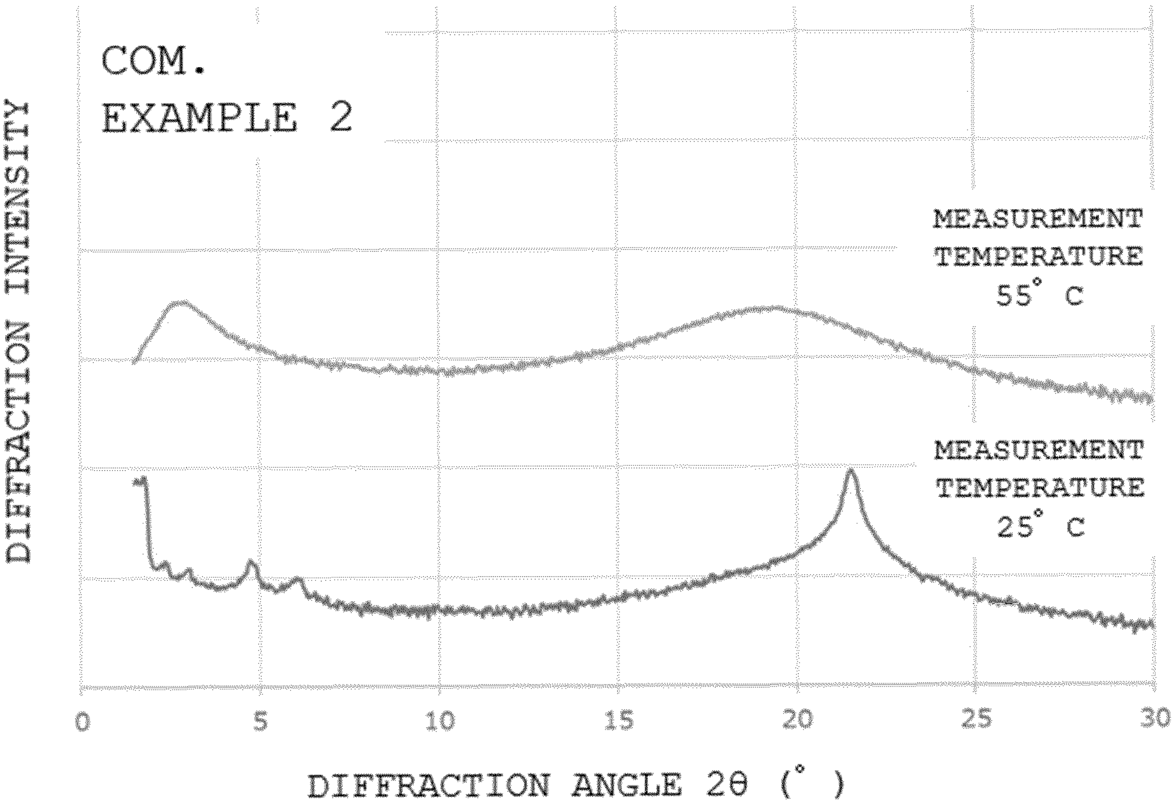
COM.
EXAMPLE 2
DIFFRACTION INTENSITY
MEASUREMENT
TEMPERATURE
55° C
MEASUREMENT
TEMPERATURE
25° C
0
5
10
15
20
25
30
DIFFRACTION ANGLE 2θ (° )

[Figure 6]

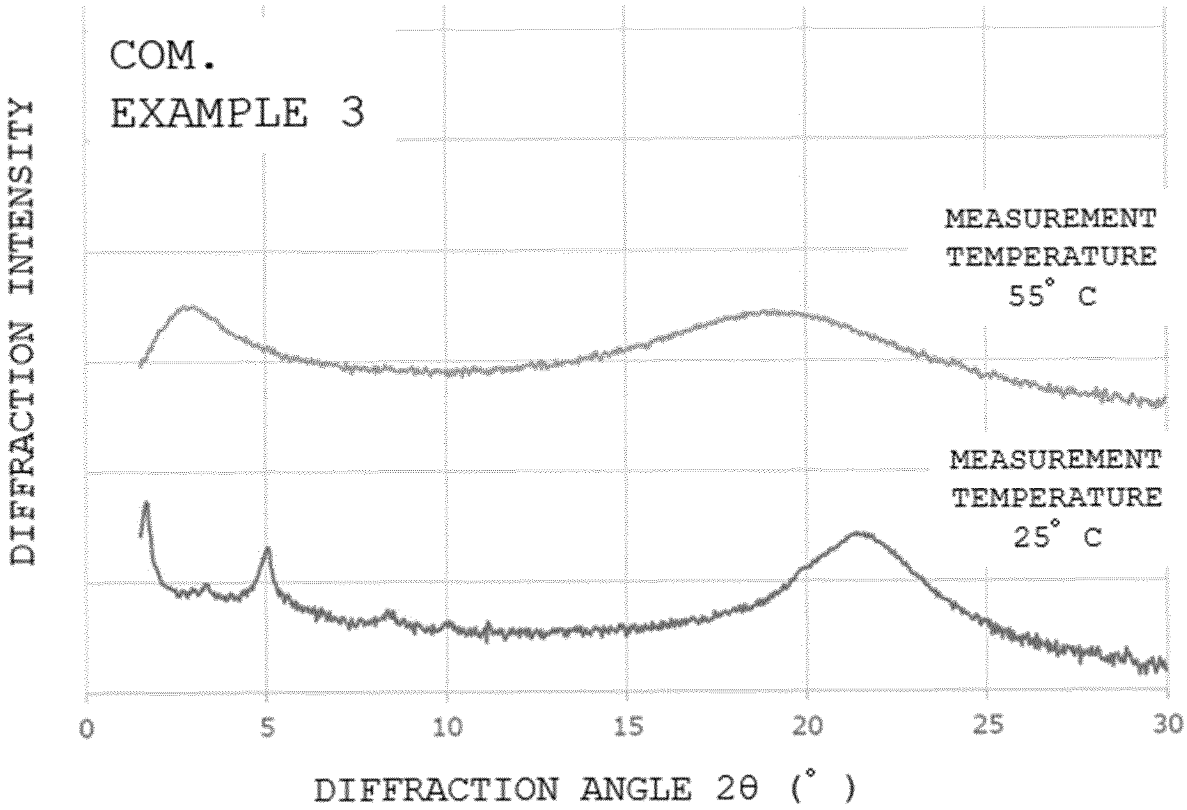
COM.
EXAMPLE 3
DIFFRACTION INTENSITY
MEASUREMENT
TEMPERATURE
55° C
MEASUREMENT
TEMPERATURE
25° C
0
5
10
15
20
25
30
DIFFRACTION ANGLE 2θ (° )

[Figure 7]

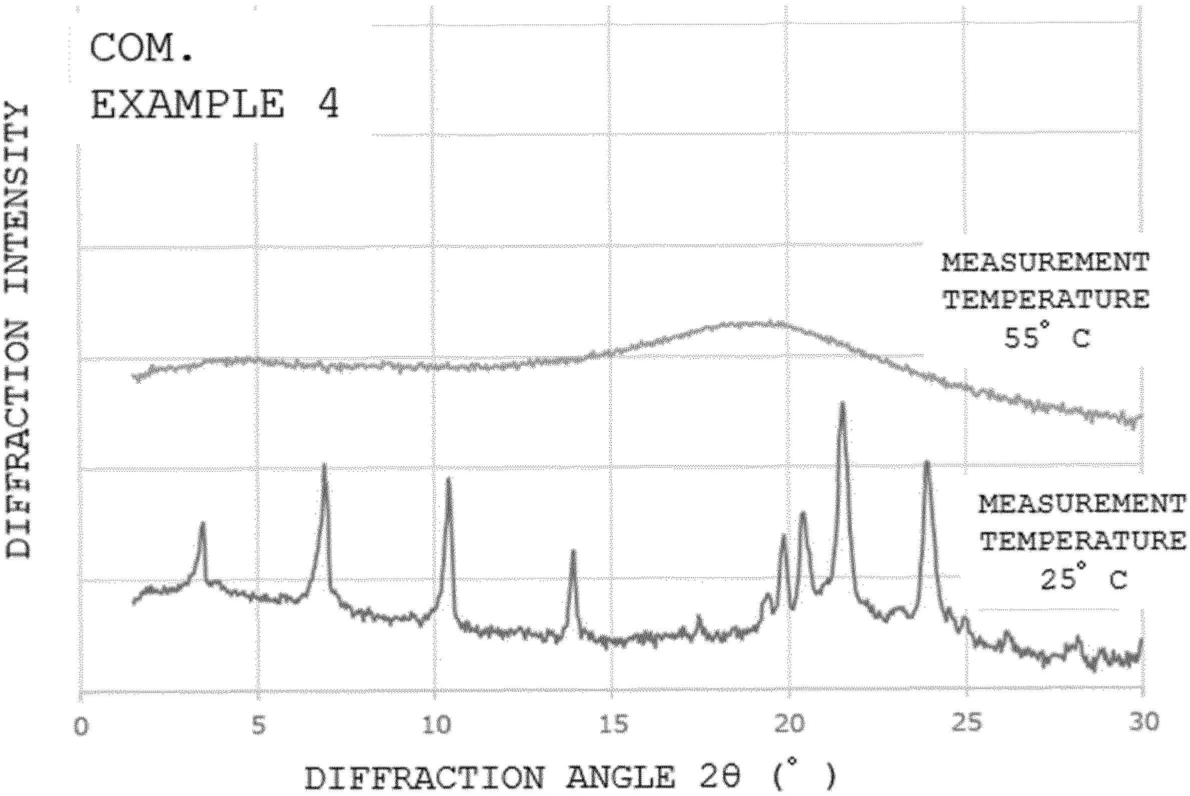
COM.
EXAMPLE 4
DIFFRACTION INTENSITY
MEASUREMENT
TEMPERATURE
55° C
MEASUREMENT
TEMPERATURE
25° C
0
5
10
15
20
25
30
DIFFRACTION ANGLE 2θ (° )

## INTERNATIONAL SEARCH REPORT

International application No.
**PCT/JP2024/010275**

**A. CLASSIFICATION OF SUBJECT MATTER**

***C09K 3/18***(2006.01)i; ***D06M 13/224***(2006.01)i; ***D21H 21/14***(2006.01)i
FI: C09K3/18 101; D06M13/224; D21H21/14 Z

According to International Patent Classification (IPC) or to both national classification and IPC

**B. FIELDS SEARCHED**

Minimum documentation searched (classification system followed by classification symbols)

C09K3/18; D06M13/224; D21H21/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/065382 A1 (DAIKIN INDUSTRIES, LTD.) 31 March 2022 (2022-03-31) entire text, all drawings | 1-21 |
| A | JP 2019-90009 A (MATSUMOTO YUSHI-SEIYAKU CO., LTD.) 13 June 2019 (2019-06-13) entire text, all drawings | 1-21 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/010275**

| Patent document cited in search report | Publication date (day/month/year) | Patent family member(s) | Publication date (day/month/year) |
|---|---|---|---|
| WO 2022/065382 A1 | 31 March 2022 | US 2023/0220217 A1<br>entire text, all drawings<br>EP 4219638 A1<br>KR 10-2023-0029935 A<br>CN 116096824 A | |
| JP 2019-90009 A | 13 June 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021155492 A
- WO 2012090580 A


### Non-patent literature cited in the description


- The JOCS Standard Methods for the Analysis of Fats. Oils and Related Materials (I). 2003
- Seni Sensyoku Kako Jiten (in Japanese; Fiber-dyeing process dictionary). THE NIKKAN KOGYO SHIMBUN, LTD., 1963, 396-397
- Irozome Kagaku (in Japanese; dyeing chemistry). Jikkyo Shuppan Co., Ltd., 1975, vol. III, 256-260
- Sensyoku Shiage Kiki Soran (in Japanese; Comprehensive guide to dyeing and finishing machines). Fiber Japan CO., LTD., 1981, 473-477
- Sensyoku Shiage Kiki Soran (in Japanese). Fiber Japan CO., LTD., 1981, 196-247